# EUROPÄISCHE PATENTSCHRIFT

(11) **EP 3 849 797 B1**
(45) Veröffentlichungstag und Bekanntmachung des Hinweises auf die Patenterteilung: **20.07.2022**
(21) Anmeldenummer: 19763028.8
(22) Anmeldetag: 11.09.2019
(51) Int. Cl.: B32B 15/088, B32B 15/18, B32B 27/34, B32B 5/02, B32B 15/20, B32B 27/20

(54) **LAMINAT ENTHALTEND EINE METALLSCHICHT UND EINE SCHICHT AUS EINEM POLYAMID UND EVA**
LAMINATE COMPRISING A METAL LAYER AND A LAYER MADE FROM A POLYAMIDE AND EVA
STRATIFIÉ CONTENANT UNE COUCHE MÉTALLIQUE ET UNE COUCHE DE POLYAMIDE ET D'EVA

(30) Priorität: 14.09.2018 EP 18194556
(43) Veröffentlichungstag der Anmeldung: 21.07.2021
(73) Patentinhaber: BASF SE, 67056 Ludwigshafen am Rhein (DE)
(72) Erfinder: DESBOIS, Philippe, 67056 Ludwigshafen (DE); DE OLIVEIRA, Rui, 67056 Ludwigshafen (DE); SPIES, Patrick, 67056 Ludwigshafen (DE); SIMON, Jasmina, 67056 Ludwigshafen (DE); WEIMER, Julia, 38106 Braunschweig (DE)
(74) Vertreter: BASF IP Association
(86) Internationale Anmeldenummer: PCT/EP2019/074260
(87) Internationale Veröffentlichungsnummer: WO 2020/053296

(56) Entgegenhaltungen:
- EP-A1- 2 085 215
- WO-A1-2005/014278
- US-A1- 2011 200 816

## Beschreibung

Die vorliegende Erfindung betrifft ein Laminat, umfassend mindestens eine erste Schicht mindestens eines ersten Metalls und mindestens eine weitere Schicht einer Polymerzusammensetzung (PZ). Darüber hinaus betrifft die vorliegende Erfindung ein Verfahren zur Herstellung des erfindungsgemäßen Laminats.

Eine in der heutigen Zeit häufig gestellte Aufgabe ist die Bereitstellung neuer Materialien, insbesondere für den Flugzeugbau, den Automobilbau und den Bootsbau, die leichter sind als die bislang eingesetzten Materialien. Gleichzeitig sollen diese neuen Materialien dieselben mechanischen Eigenschaften, insbesondere Festigkeit, Steifigkeit und Stabilität, wie die bekannten Materialien aufweisen oder diesen sogar überlegen sein. Die neuen Materialien sollen darüber hinaus mit bekannten Verfahren umgeformt werden können, wie beispielsweise mittels Tiefziehen, Walzen, Biegen, Prägen oder Falzen.

Die WO 2005/014278 beschreibt Laminate, die zwischen zwei äußeren Metallschichten eine klebende Polymerschicht enthalten. Diese Polymerschicht enthält ein Polyamid 6, Polyamid 6.6, Polyamid 11, Polyamid 12, Polyamid 4.6, Polyamid 6.10 oder Polyamid 6.12 und ein Copolymer aus Ethylen und einer ungesättigten Carbonsäure und/oder einem Carbonsäurederivat und einem reaktiven Copolymer. Das Copolymer aus Ethylen und einer ungesättigten Carbonsäure und/oder einem Carbonsäurederivat ist vorzugsweise ein Graft-Copolymer.

Nachteilig bei den in der WO 2005/014278 beschriebenen Laminaten ist, dass sie insbesondere nach Lagerung in feuchter Umgebung nur noch eine schlechte Zugfestigkeit aufweisen. Darüber hinaus weist die Polymerschicht häufig schwankende Haftungseigenschaften auf.

Die US 2011/020816 beschreibt Laminate, die zwei Metallschichten und eine dazwischen liegende Polymerschicht umfassen. Die Polymerschicht enthält beispielsweise ein Polyamid 6/66-Copolymer.

Auch die in der US 2011/020816 beschriebenen Laminate weisen insbesondere nach Lagerung in feuchter Umgebung nur schlechte Zugfestigkeiten auf oder werden durch Luftfeuchtigkeit sogar bis zur Unbenutzbarkeit zerstört.

Die DE 10 2011 084 519 beschreibt Siegelschichten für Solarzellen, die eine erste Außenschicht, eine Mittelschicht und eine zweite Außenschicht umfassen. Die Schichten können Polyamide, wie beispielsweise Polyamid 6 oder Polyamid 66, enthalten.

Die der vorliegenden Erfindung zugrunde liegende Aufgabe besteht somit darin, ein Laminat sowie ein Verfahren zu dessen Herstellung bereitzustellen, welches die Nachteile der im Stand der Technik beschriebenen Laminate nicht oder nur in vermindertem Maße aufweist. Insbesondere soll das Laminat auch nach längerer Lagerung bei höheren Luftfeuchtigkeiten noch eine hohe Zugfestigkeit aufweisen.

Gelöst wird diese Aufgabe durch ein Laminat umfassend mindestens eine erste Schicht mindestens eines ersten Metalls und mindestens eine weitere Schicht einer Polymerzusammensetzung (PZ), dadurch gekennzeichnet, dass die Polymerzusammensetzung (PZ) die Komponenten
(A) mindestens ein Polyamid,
(B) mindestens ein Copolymer erhältlich durch Polymerisation mindestens der Komponenten
   (B1) mindestens ein C₂-C₂₀-Alken und
   (B2) mindestens ein C₂-C₁₈-Alkenylester,
enthält.

Es wurde überraschend gefunden, dass die erfindungsgemäßen Laminate sowohl direkt nach ihrer Herstellung als auch nach längerer Lagerung bei höherer Luftfeuchtigkeit, beispielsweise nach Lagerung für 14 Tage bei 70 °C und 62 % relativer Luftfeuchtigkeit, noch gute Zugfestigkeiten aufweisen.

Nachfolgend wird die vorliegende Erfindung näher erläutert.

### Laminat

Erfindungsgemäß umfasst das Laminat mindestens eine erste Schicht mindestens eines ersten Metalls und mindestens eine weitere Schicht einer Polymerzusammensetzung (PZ).

"Mindestens eine erste Schicht" bedeutet im Rahmen der vorliegenden Erfindung sowohl genau eine erste Schicht als auch zwei oder mehrere erste Schichten.

"Mindestens ein erstes Metall" bedeutet im Rahmen der vorliegenden Erfindung sowohl genau ein erstes Metall als auch eine Mischung aus zwei oder mehreren ersten Metallen.

"Mindestens eine weitere Schicht" bedeutet im Rahmen der vorliegenden Erfindung sowohl genau eine weitere Schicht als auch zwei oder mehrere weitere Schichten.

Bevorzugt umfasst das Laminat zusätzlich mindestens eine zweite Schicht mindestens eines zweiten Metalls, wobei die mindestens eine erste Schicht mindestens eines ersten Metalls mit der mindestens einen zweiten Schicht mindestens eines zweiten Metalls über die mindestens eine weitere Schicht der Polymerzusammensetzung (PZ) verbunden ist. In einem solchen Laminat folgt also auf die mindestens eine erste Schicht mindestens eine weitere Schicht und auf diese wiederum mindestens eine zweite Schicht.

Ein solches Laminat, das mindestens eine erste Schicht, mindestens eine weitere Schicht und mindestens eine zweite Schicht umfasst, wird auch als Sandwichmaterial bezeichnet.

Gegenstand der vorliegenden Erfindung ist daher auch ein Laminat, bei dem das Laminat zusätzlich mindestens eine zweite Schicht mindestens eines zweiten Metalls umfasst und bei dem die mindestens eine erste Schicht mit der mindestens einen zweiten Schicht über die mindestens eine weitere Schicht verbunden ist.

Das mindestens eine erste Metall der mindestens einen ersten Schicht kann gleich oder verschieden von dem mindestens einen zweiten Metall der mindestens einen zweiten Schicht sein. Bevorzugt ist das mindestens eine erste Metall der mindestens einen ersten Schicht gleich dem mindestens einen zweiten Metall der mindestens einen zweiten Schicht.

Das Laminat umfasst mindestens eine erste Schicht mindestens eines ersten Metalls. Anders ausgedrückt umfasst das Laminat mindestens eine erste Schicht, die aus mindestens einem ersten Metall besteht.

Die mindestens eine erste Schicht mindestens eines ersten Metalls weist beispielsweise eine Dicke im Bereich von 0,1 bis 0,6 mm, bevorzugt im Bereich von 0,15 bis 0,4 mm und insbesondere bevorzugt im Bereich von 0,18 bis 0,3 mm auf.

Gegenstand der vorliegenden Erfindung ist daher auch ein Laminat, bei dem die mindestens eine erste Schicht eine Dicke im Bereich von 0,1 bis 0,6 mm aufweist.

Bevorzugt umfasst das Laminat zusätzlich mindestens eine zweite Schicht mindestens eines zweiten Metalls. Anders ausgedrückt umfasst das Laminat bevorzugt zusätzlich mindestens eine zweite Schicht, die aus mindestens einem zweiten Metall besteht.

Die mindestens eine zweite Schicht mindestens eines zweiten Metalls weist beispielsweise eine Dicke im Bereich von 0,1 bis 0,6 mm, bevorzugt im Bereich von 0,15 bis 0,4 mm und insbesondere bevorzugt im Bereich von 0,18 bis 0,3 mm auf.

Gegenstand der vorliegenden Erfindung ist daher auch ein Laminat, bei dem das Laminat zusätzlich mindestens eine zweite Schicht mindestens eines zweiten Metalls umfasst, wobei die mindestens eine zweite Schicht eine Dicke im Bereich von 0,1 bis 0,6 mm aufweist.

Die Dicke der mindestens einen zweiten Schicht kann gleich oder verschieden von der Dicke der mindestens einen ersten Schicht sein. Bevorzugt ist die Dicke der mindestens einen zweiten Schicht gleich der Dicke der mindestens einen ersten Schicht.

Als das mindestens eine erste Metall der mindestens einen ersten Schicht eignen sich alle dem Fachmann bekannten Metalle und Metalllegierungen, die bei den Herstellungstemperaturen und den Gebrauchstemperaturen des Laminats fest sind. Bevorzugt ist das mindestens eine erste Metall der mindestens einen ersten Schicht ausgewählt aus der Gruppe bestehend aus Eisen, Aluminium, Kupfer, Nickel und Magnesium sowie Legierungen daraus. Besonders bevorzugt ist das mindestens eine erste Metall eine Legierung aus Eisen, insbesondere bevorzugt ist das mindestens eine erste Metall Stahl.

Gegenstand der vorliegenden Erfindung ist daher auch ein Laminat, bei dem das mindestens eine erste Metall der mindestens einen ersten Schicht ausgewählt ist aus der Gruppe bestehend aus Eisen, Aluminium, Kupfer, Nickel und Magnesium sowie Legierungen daraus.

Gegenstand der vorliegenden Erfindung ist daher auch ein Laminat, bei dem das mindestens eine erste Metall ausgewählt ist aus der Gruppe bestehend aus Eisen, Aluminium, Kupfer, Nickel und Magnesium sowie Legierungen daraus.

Stahl ist dem Fachmann bekannt. Unter "Stahl" werden im Rahmen der vorliegenden Erfindung Legierungen, die als Hauptbestandteil Eisen enthalten, verstanden. Dies entspricht der Definition von Stahl gemäß DIN EN 10020:2000-07.

Das mindestens eine erste Metall kann beschichtet oder unbeschichtet sein. Bevorzugt ist das mindestens eine erste Metall beschichtet. Geeignete Beschichtungen für das mindestens eine erste Metall sind dem Fachmann als solche bekannt und beispielsweise Haftvermittlerschichten, Korrosionsschutzschichten, Farbe, Zink- oder Magnesiumbeschichtungen.

Bevorzugt ist das mindestens eine Metall verzinkt. "Verzinkt" bedeutet, dass das mindestens eine erste Metall mit einem weiteren Metall, insbesondere mit Zink oder Legierungen von Zink, beschichtet ist.

Besonders bevorzugt ist das mindestens eine erste Metall daher verzinkter Stahl.

Das Verzinken des mindestens einen ersten Metalls kann nach dem Fachmann bekannten Methoden erfolgen, beispielsweise durch Feuerverzinkung oder durch galvanisches Verzinken.

Ist das mindestens eine erste Metall verzinkt, so kann es darüber hinaus noch weitere Beschichtungen, wie beispielsweise Haftvermittlerschichten und/oder Farbe, aufweisen. Dies ist dem Fachmann bekannt.

Das Beschichten des mindestens einen ersten Metalls kann nach allen dem Fachmann bekannten Methoden erfolgen, beispielsweise kann die Beschichtung aus einer wässrigen Lösung oder einer Dispersion erfolgen.

Für das mindestens eine zweite Metall der mindestens einen zweiten Schicht gelten die zuvor beschriebenen Ausführungen und Bevorzugungen für das mindestens eine erste Metall der mindestens einen ersten Schicht entsprechend.

Gegenstand der vorliegenden Erfindung ist daher auch ein Laminat, bei dem das Laminat zusätzlich mindestens eine zweite Schicht mindestens eines zweiten Metalls umfasst, wobei das mindestens eine zweite Metall der mindestens einen zweiten Schicht ausgewählt ist aus der Gruppe bestehend aus Eisen, Aluminium, Kupfer, Nickel und Magnesium sowie Legierungen daraus.

Das Laminat umfasst mindestens eine weitere Schicht einer Polymerzusammensetzung (PZ). Anders ausgedrückt bedeutet dies, dass die mindestens eine weitere Schicht aus der Polymerzusammensetzung (PZ) besteht.

Die mindestens eine weitere Schicht einer Polymerzusammensetzung (PZ) weist beispielsweise eine Dicke im Bereich von 0,02 bis 1,5 mm, bevorzugt im Bereich von 0,05 bis 1 mm und insbesondere bevorzugt im Bereich von 0,1 bis 0,5 mm auf.

Gegenstand der vorliegenden Erfindung ist daher auch ein Laminat, bei dem die mindestens eine weitere Schicht eine Dicke im Bereich von 0,02 bis 1,5 mm aufweist.

Gegenstand der vorliegenden Erfindung ist daher auch ein Laminat, bei dem die mindestens eine erste Schicht eine Dicke im Bereich von 0,1 mm bis 0,6 mm aufweist und/oder bei dem die mindestens eine weitere Schicht eine Dicke im Bereich von 0,02 bis 1,5 mm aufweist.

### Polymerzusammensetzung (PZ)

Erfindungsgemäß enthält die Polymerzusammensetzung (PZ) die Komponenten (A) mindestens ein Polyamid und (B) mindestens ein Copolymer, erhältlich durch Polymerisation mindestens der Komponenten (B1) mindestens ein C₂-C₂₀-Alken und (B2) mindestens ein C₂-C₁₈-Alkenylester.

"Mindestens ein Polyamid" bedeutet im Rahmen der vorliegenden Erfindung sowohl genau ein Polyamid als auch eine Mischung (Blend) aus zwei oder mehreren Polyamiden.

"Mindestens ein Copolymer" bedeutet im Rahmen der vorliegenden Erfindung sowohl genau ein Copolymer als auch eine Mischung (Blend) aus zwei oder mehreren Copolymeren.

Die Begriffe "Komponente (A)" und "mindestens ein Polyamid" werden im Rahmen der vorliegenden Erfindung synonym gebraucht und besitzen daher die gleiche Bedeutung. Dementsprechend werden auch die Begriffe "Komponente (B)" und "mindestens ein Copolymer" im Rahmen der vorliegenden Erfindung synonym gebraucht und besitzen die gleiche Bedeutung.

Die Polymerzusammensetzung (PZ) kann darüber hinaus zusätzlich mindestens ein weiteres Polymer enthalten.

"Mindestens ein weiteres Polymer" bedeutet im Rahmen der vorliegenden Erfindung sowohl genau ein weiteres Polymer als auch eine Mischung (Blend) aus zwei oder mehreren weiteren Polymeren.

Als mindestens ein weiteres Polymer eignen sich alle dem Fachmann bekannten weiteren Polymere. Es versteht sich von selbst, dass das mindestens eine weitere Polymer von den Komponenten (A) und (B) verschieden ist.

Bevorzugt ist das mindestens eine weitere Polymer ausgewählt aus der Gruppe bestehend aus Polyethylen und Copolymeren aus zumindest zwei Monomeren, ausgewählt aus der Gruppe bestehend aus Ethylen, Acrylsäure, Maleinsäureanhydrid, Isobutylen, Propylen, Octen, Alkylacrylat und Alkylmethacrylat.

Gegenstand der vorliegenden Erfindung ist daher auch ein Laminat bei dem die Polymerzusammensetzung (PZ) zusätzlich mindestens ein weiteres Polymer ausgewählt aus der Gruppe bestehend aus Polyethylen und Copolymeren aus zumindest zwei Monomeren, ausgewählt aus der Gruppe bestehend aus Ethylen, Isobutylen, Propylen, Octen, Alkylacrylat, Alkylmethacrylat, Acrylsäure und Maleinsäureanhydrid enthält.

Es versteht sich von selbst, dass das mindestens eine weitere Polymer auch von der weiter unten beschriebenen Komponenten (C), mindestens ein Kautschuk, verschieden ist.

Alkylacrylate sind dem Fachmann bekannt und werden auch als Acrylsäurealkylester bezeichnet. Alkylacrylate bilden sich bei Umsetzung von Acrylsäure mit einem Alkylalkohol. Erfindungsgemäß bevorzugt ist n-Butylacrylat als Alkylacrylat.

Alkylmethacrylate sind dem Fachmann ebenfalls bekannt und werden auch als Methacrylsäurealkylester bezeichnet. Alkylmethacrylate bilden sich bei Umsetzung von Methacrylsäure mit einem Alkylalkohol. Erfindungsgemäß bevorzugt ist Methylmethacrylat als Alkylmethacrylat.

Darüber hinaus kann die Polymerzusammensetzung (PZ) zusätzlich eine Komponente (C), mindestens einen Kautschuk, enthalten. Die gegebenenfalls enthaltene Komponente (C) wird weiter unter näher erläutert.

Beispielsweise enthält die Polymerzusammensetzung (PZ) im Bereich von 1 bis 30 Gew.-% der Komponente (C), bevorzugt im Bereich von 2 bis 20 Gew.-% und insbesondere bevorzugt im Bereich von 5 bis 15 Gew.-%, jeweils bezogen auf die Summe der Gewichtsprozente der Komponenten (A), (B) und (C), bevorzugt bezogen auf das Gesamtgewicht der Polymerzusammensetzung (PZ).

Gegenstand der vorliegenden Erfindung ist daher auch ein Laminat, bei dem die Polymerzusammensetzung (PZ) zusätzlich im Bereich von 1 bis 30 Gew.-% einer Komponente (C), mindestens eines Kautschuks, enthält, bezogen auf die Summe der Gewichtsprozente der Komponenten (A), (B) und (C).

Darüber hinaus kann die Polymerzusammensetzung (PZ) zusätzlich mindestens einen Füllstoff enthalten.

"Mindestens ein Füllstoff" bedeutet im Rahmen der vorliegenden Erfindung sowohl genau ein Füllstoff als auch eine Mischung aus zwei oder mehreren Füllstoffen.

Als Füllstoff eignen sich alle dem Fachmann bekannten Füllstoffe, die mit den in der Polymerzusammensetzung (PZ) enthaltenen Komponenten, insbesondere den Komponenten (A) und (B), gemischt werden können.

Bevorzugt ist der mindestens eine Füllstoff ausgewählt aus der Gruppe bestehend aus anorganischen Füllstoffen, organischen Füllstoffen und Naturfüllstoffen.

Der mindestens eine Füllstoff ist üblicherweise partikelförmig. Beispielsweise kann der mindestens eine Füllstoff ein Fasermaterial sein oder beispielsweise in Form von Kugeln vorliegen. Der mindestens eine Füllstoff weist beispielsweise ein Aspektverhältnis im Bereich von 1 bis 15, bevorzugt im Bereich von 1 bis 10 und insbesondere bevorzugt im Bereich von 1 bis 5 auf. Unter dem "Aspektverhältnis" wird im Rahmen der vorliegenden Erfindung das Verhältnis der größten Dimension eines Partikels des mindestens einen Füllstoffs zur kleinsten Dimension eines Partikels des mindestens einen Füllstoffs verstanden.

Unter "Fasermaterialien" werden im Rahmen der vorliegenden Erfindung sämtliche Materialien verstanden, die Fasern aufweisen, wie beispielsweise einzelne Fasern, Faserbündel (Rovings), Vliese, Gelege, Gewebe oder Gestricke.

Beispielsweise ist der mindestens eine Füllstoff daher ausgewählt aus der Gruppe bestehend aus Wollastonit, Talkum, Borfasermaterialien, Glasfasermaterialien, Kohlenstofffasermaterialien, Kieselsäurefasermaterialien, Keramikfasermaterialien, Basaltfasermaterialien, Metallfasermaterialien, Aramidfasermaterialien, Poly-(p-Phenylen-2,6-Benzobisoxazol)-Fasermaterialien, Polyesterfasermaterialien, Nylonfasermaterialien, Polyethylenfasermaterialien, Holzfasermaterialien, Flachsfasermaterialien, Hanffasermaterialien, Kokosfasermaterialien und Sisalfasermaterialien.

Besonders bevorzugt ist der mindestens eine Füllstoff ausgewählt aus der Gruppe bestehend aus Glasfasermaterialien, Kohlenstofffasermaterialien, Aramidfasermaterialen, Poly-(p-Phenylen-2,6-Benzobisoxazol)-Fasermaterialen, Borfasermaterialien, Metallfasermaterialien und Kaliumtitanatfasermaterialien. Insbesondere bevorzugt ist der mindestens eine Füllstoff ein Glasfasermaterial.

Gegenstand der vorliegenden Erfindung ist daher auch ein Laminat, bei dem die Polymerzusammensetzung zusätzlich mindestens einen Füllstoff ausgewählt aus der Gruppe bestehend aus anorganischen Füllstoffen, organischen Füllstoffen und Naturfüllstoffen enthält.

In einer bevorzugten Ausführungsform enthält die Polymerzusammensetzung (PZ) keinen Füllstoff.

Beispielsweise enthält die Polymerzusammensetzung (PZ) im Bereich von 40 bis 97 Gew.-% der Komponente (A), bevorzugt im Bereich von 60 bis 96 Gew.-% und insbesondere bevorzugt im Bereich von 70 bis 93 Gew.-%, jeweils bezogen auf die Summe der Gewichtsprozente der Komponenten (A), (B) und gegebenenfalls der Komponente (C), gegebenenfalls des mindestens einen weiteren Polymers und gegebenenfalls des mindestens einen Füllstoffs, bevorzugt bezogen auf das Gesamtgewicht der Polymerzusammensetzung (PZ).

Die Polymerzusammensetzung (PZ) enthält beispielsweise im Bereich von 2 bis 30 Gew.-%, bevorzugt im Bereich von 2 bis 20 Gew.-% und insbesondere bevorzugt im Bereich von 2 bis 15 Gew.-% der Komponente (B), jeweils bezogen auf die Summe der Gewichtsprozente der Komponenten (A) und (B) sowie gegebenenfalls der Komponente (C), gegebenenfalls des mindestens einen weiteren Polymers und gegebenenfalls des mindestens einen Füllstoffs, bevorzugt bezogen auf das Gesamtgewicht der Polymerzusammensetzung (PZ).

Gegenstand der vorliegenden Erfindung ist daher auch ein Laminat, bei dem die Polymerzusammensetzung (PZ) im Bereich von 2 bis 30 Gew.-% der Komponente (B) enthält, bezogen auf die Summe der Gewichtsprozente der Komponenten (A) und (B).

Die Polymerzusammensetzung enthält beispielsweise im Bereich von 0 bis 50 Gew.-%, bevorzugt im Bereich von 5 bis 50 Gew.-% und insbesondere bevorzugt im Bereich von 10 bis 30 Gew.-% des mindestens einen weiteren Polymers, jeweils bezogen auf die Summe der Gewichtsprozente der Komponenten (A), (B) und des mindestens einen weiteren Polymers sowie gegebenenfalls der Komponente (C) und gegebenenfalls des mindestens einen Füllstoffs, bevorzugt bezogen auf das Gesamtgewicht der Polymerzusammensetzung (PZ).

Die Polymerzusammensetzung (PZ) enthält beispielsweise im Bereich von 0,1 bis 70 Gew.-% des mindestens einen Füllstoffs, bevorzugt im Bereich von 0,5 bis 60 Gew.-% und insbesondere bevorzugt im Bereich von 1 bis 50 Gew.-% des mindestens einen Füllstoffs, jeweils bezogen auf die Summe der Gewichtsprozente der Komponenten (A) und (B) sowie des mindestens einen Füllstoffs und gegebenenfalls der Komponente (C) und gegebenenfalls des mindestens einen weiteren Polymers, bevorzugt bezogen auf das Gesamtgewicht der Polymerzusammensetzung (PZ).

Die Summe der Gewichtsprozente der Komponenten (A), (B) sowie gegebenenfalls der Komponente (C), gegebenenfalls des mindestens einen weiteren Polymers und gegebenenfalls des mindestens einen Füllstoffs addieren sich üblicherweise zu 100 Gew.-%.

Die Polymerzusammensetzung (PZ) kann darüber hinaus dem Fachmann bekannte Additive enthalten. Beispielsweise sind Additive, die in der Polymerzusammensetzung (PZ) enthalten sein können, ausgewählt aus der Gruppe bestehend aus Stabilisatoren, Farbstoffen, Antistatika, Füllölen, Oberflächenverbesserern, Sikkativen, Entformungshilfsmitteln, Trennmitteln, Antioxidantien, Lichtstabilisatoren, PVC-Stabilisatoren, Gleitmitteln, Flammschutzmitteln, Treibmitteln, Schlagzähmodifikatoren, Haftvermittlern, Kopplungsmitteln und Nukleierungshilfsmitteln.

Gegenstand der vorliegenden Erfindung ist daher auch ein Laminat, bei dem die Polymerzusammensetzung (PZ) zusätzlich mindestens ein Additiv ausgewählt aus der Gruppe bestehend aus Stabilisatoren, Farbstoffen, Antistatika, Füllölen, Oberflächenverbesserern, Sikkativen, Entformungshilfsmitteln, Trennmitteln, Antioxidantien, Lichtstabilisatoren, PVC-Stabilisatoren, Gleitmitteln, Flammschutzmitteln, Treibmitteln, Schlagzähmodifikatoren, Haftvermittlern, Kopplungsmitteln und Nukleierungshilfsmitteln enthält.

Diese Additive sind dem Fachmann als solche bekannt. Kopplungsmittel werden auch als Vernetzungsmittel bezeichnet. Unter Haftvermittlern werden im Rahmen der vorliegenden Erfindung Additive verstanden, die die Haftung der Polymerzusammensetzung (PZ) der mindestens einen weiteren Schicht an die mindestens eine erste Schicht sowie gegebenenfalls an die mindestens eine zweite Schicht weiter verbessern.

### Komponente (A)

Erfindungsgemäß enthält die Polymerzusammensetzung (PZ) die Komponente (A), mindestens ein Polyamid.

Geeignete Polyamide weisen im Allgemeinen eine Viskositätszahl von 70 bis 350 ml/g, vorzugsweise von 70 bis 240 ml/g auf. Die Bestimmung der Viskositätszahl erfolgt erfindungsgemäß aus einer 0,5-gew.-%igen Lösung des Polyamids in 96-gew.-%iger Schwefelsäure bei 25 °C gemäß ISO 307.

Als Polyamide sind teilkristalline Polyamide bevorzugt. Geeignete Polyamide weisen ein gewichtsmittleres Molekulargewicht (M_{W}) im Bereich von 500 bis 2 000 000 g/mol, bevorzugt im Bereich von 5 000 bis 500 000 g/mol und besonders bevorzugt im Bereich von 10 000 bis 100 000 g/mol, auf. Das gewichtsmittlere Molekulargewicht (M_{W}) wird bestimmt gemäß ASTM D4001.

Als Polyamide sind beispielsweise Polyamide geeignet, die sich von Lactamen mit 7 bis 13 Ringgliedern ableiten. Als Polyamide sind weiterhin Polyamide geeignet, die durch Umsetzung von Dicarbonsäuren mit Diaminen erhalten werden.

Als Polyamide, die sich von Lactamen ableiten, seien beispielhaft Polyamide erwähnt, die sich von Polycaprolactam, Polycapryllactam und/oder Polylaurinlactam ableiten.

Weiterhin geeignete Polyamide sind erhältlich aus ω-Aminoalkylnitrilen. Bevorzugtes ω-Aminoalkylnitril ist Aminocapronitril, das zu Polyamid 6 führt. Weiterhin können Dinitrile mit Diamin umgesetzt werden. Hierbei sind Adipodinitril und Hexamethylendiamin bevorzugt, deren Polymerisation zu Polyamid 66 führt. Die Polymerisation von Nitrilen erfolgt in Gegenwart von Wasser und wird auch als Direktpolymerisation bezeichnet.

Für den Fall, dass Polyamide eingesetzt werden, die aus Dicarbonsäuren und Diaminen erhältlich sind, können Dicarbonsäurealkane (aliphatische Dicarbonsäuren) mit 6 bis 36 Kohlenstoffatomen, bevorzugt 6 bis 12 Kohlenstoffatomen, und besonders bevorzugt 6 bis 10 Kohlenstoffatomen eingesetzt werden. Darüber hinaus sind aromatische Dicarbonsäuren geeignet.

Beispielhaft seien hier Adipinsäure, Azelainsäure, Sebacinsäure, Dodecandisäure sowie Terephthalsäure und/oder Isophtalsäure als Dicarbonsäuren genannt.

Als Diamine eigenen sich beispielsweise Alkandiamine mit 4 bis 36 Kohlenstoffatomen, bevorzugt Alkandiamine mit 6 bis 12 Kohlenstoffatomen, insbesondere Alkandiamine mit 6 bis 8 Kohlenstoffatomen sowie aromatische Diamine, wie beispielsweise m-Xylylendiamin, Di-(4-aminophenyl)methan, Di-(4-aminocyclohexyl)-methan, 2,2-Di-(4-aminophenyl)-propan und 2,2-Di-(4-aminocyclohexyl)-propan sowie 1,5-Diamino-2-methyl-pentan.

Bevorzugte Polyamide sind Polyhexamethylenadipinsäureamid, Polyhexamethylensebacinsäureamid und Polycaprolactam sowie Copolyamid 6/66, insbesondere mit einem Anteil von 5 bis 95 Gew.-% an Caprolactam-Einheiten.

Weiterhin sind Polyamide geeignet, die durch Copolymerisation zweier oder mehrerer der vorstehend und nachstehend genannten Monomeren erhältlich sind, oder Mischungen mehrerer Polyamide, wobei das Mischungsverhältnis beliebig ist. Als Mischungen besonders bevorzugt sind Mischungen von Polyamid 66 mit anderen Polyamiden (P), insbesondere Copolyamid 6/66.

Geeignete Polyamide sind somit aliphatische, teilaromatische oder aromatische Polyamide. Der Begriff "aliphatische Polyamide" bedeutet, dass die Polyamide ausschließlich aus aliphatischen Monomeren aufgebaut sind. Der Begriff "teilaromatische Polyamide" bedeutet, dass die Polyamide sowohl aus aliphatischen als auch aus aromatischen Monomeren aufgebaut sind. Der Begriff "aromatische Polyamide" bedeutet, dass die Polyamide ausschließlich aus aromatischen Monomeren aufgebaut sind.

Die nachfolgende nicht abschließende Aufstellung enthält die vorstehend genannten sowie weitere Polyamide, die für den Einsatz im erfindungsgemäßen Laminat geeignet sind, sowie die enthaltenen Monomere.
AB-Polymere:
   - PA 4: Pyrrolidon
   - PA 6: ε-Caprolactam
   - PA 7: Enantholactam
   - PA 8: Capryllactam
   - PA 9: 9-Aminopelargonsäure
   - PA 11: 11-Aminoundecansäure
   - PA 12: Laurinlactam
AA/BB-Polymere:
   - PA 46: Tetramethylendiamin, Adipinsäure
   - PA 66: Hexamethylendiamin, Adipinsäure
   - PA 69: Hexamethlyendiamin, Azelainsäure
   - PA 610: Hexamethylendiamin, Sebacinsäure
   - PA 612: Hexamethylendiamin, Decandicarbonsäure
   - PA 613: Hexamethylendiamin, Undecandicarbonsäure
   - PA 1212: 1,12-Dodecandiamin, Decandicarbonsäure
   - PA 1313: 1,13-Diaminotridecan, Undecandicarbonsäure
   - PA 6T: Hexamethylendiamin, Terephthalsäure
   - PA 9T: Nonyldiamin, Terephthalsäure
   - PA MXD6: m-Xylyendiamin, Adipinsäure

   - PA 6I: Hexamethylendiamin, Isophthalsäure
   - PA 6-3-T: Trimethylhexamethylendiamin, Terephthalsäure
   - PA 6/6T: (siehe PA 6 und PA 6T)
   - PA 6/66: (siehe PA 6 und PA 66)
   - PA 6/12: (siehe PA 6 und PA 12)
   - PA 66/6/610: (siehe PA 66, PA 6 und PA 610)
   - PA 6I/6T: (siehe PA 6I und PA 6T)
   - PA PACM 12: Diaminodicyclohexylmethan, Laurinlactam
   - PA 6I/6T/PACM: wie PA 6I/6T und Diaminodicyclohexylmethan
   - PA 12/MACMI: Laurinlactam, Dimethyl-diaminodicyclohexylmethan, Isophthalsäure
   - PA 12/MACMT: Laurinlactam, Dimethyl-diaminodicyclohexylmethan, Terephthalsäure
   - PA PDA-T: Phenylendiamin, Terephthalsäure

Bevorzugt ist die Komponente (A) ausgewählt aus der Gruppe bestehend aus Polyamid 6 (PA 6), Polyamid 6.6 (PA 6.6), Polyamid 6.10 (PA 6.10), Polyamid 6.12 (PA 6.12), Polyamid 12 (PA12), Polyamid 6.36 (PA 6.36), Polyamid 6/6.6 (PA 6/6.6), Polyamid 6/6I6T (PA 6/6I6T), Polyamid 6/6I (PA 6/6I), Polyamid 6/6.36 (PA 6/6.36) und Polyamid 6/6T (PA 6/6T).

Weiterhin bevorzugt ist die Komponente (A) erhältlich durch Polymerisation mindestens der Komponenten
(A1) Caprolactam,
(A2) mindestens eine C₄-C₄₀-Disäure und
(A3) mindestens ein C₄-C₂₀-Diamin.

Gegenstand der vorliegenden Erfindung ist daher auch ein Laminat, bei dem die Komponente (A) erhältlich ist durch Polymerisation mindestens einer der Komponenten
(A1) Caprolactam,
(A2) mindestens eine C₄-C₄₀-Disäure,
(A3) mindestens ein C₄-C₂₀-Diamin.

Gegenstand der vorliegenden Erfindung ist auch ein Laminat, bei dem die Komponente (A) erhältlich ist durch Polymerisation mindestens der Komponenten
(A1) Caprolactam,
(A2) mindestens eine C₄-C₄₀-Disäure,
(A3) mindestens ein C₄-C₂₀-Diamin.

Die Begriffe "Komponente (A1)" und "Caprolactam" werden im Rahmen der vorliegenden Erfindung synonym gebraucht und besitzen daher die gleiche Bedeutung.

Ebenso werden die Begriffe "Komponente (A2)" und "mindestens eine C₄-C₄₀-Disäure" im Rahmen der vorliegenden Erfindung synonym gebraucht und besitzen die gleiche Bedeutung.

Die Begriffe "Komponente (A3)" und "mindestens ein C₄-C₂₀-Diamin" werden im Rahmen der vorliegenden Erfindung ebenfalls synonym gebraucht und besitzen daher die gleiche Bedeutung.

Ist die Komponente (A) erhältlich durch Polymerisation der Komponenten (A1), (A2) und (A3), so wird die Komponente (A) auch als Copolyamid bezeichnet. Die Begriffe "Copolyamid" und "Komponente (A)" werden dann ebenfalls synonym gebraucht und besitzen die gleiche Bedeutung.

Das Copolyamid kann hergestellt werden durch Polymerisation von beliebigen Mengen der Komponenten (A1), (A2) und (A3).

Bevorzugt wird das Copolyamid hergestellt durch Polymerisation von 20 bis 80 Gew.-% der Komponente (A1), besonders bevorzugt im Bereich von 35 bis 75 Gew.-% und insbesondere bevorzugt im Bereich von 50 bis 70 Gew.-%, jeweils bezogen auf die Summe der Gewichtsprozente der Komponenten (A1), (A2) und (A3).

Gegenstand der vorliegenden Erfindung ist daher auch ein Laminat, bei dem das Copolyamid erhältlich ist durch Polymerisation von 20 bis 80 Gew.-% der Komponente (A1) bezogen auf die Summe der Gew.-% der Komponenten (A1), (A2) und (A3).

Bei der Polymerisation werden die Komponenten (A2) und (A3) bevorzugt so eingesetzt, dass sie zusammen 20 bis 80 Gew.-%, bevorzugt 25 bis 65 Gew.-% und insbesondere bevorzugt 30 bis 50 Gew.-% ergeben, bezogen auf die Summe der Gewichtsprozente der Komponenten (A1), (A2) und (A3).

Gegenstand der vorliegenden Erfindung ist daher auch ein Laminat, bei dem das Copolyamid erhältlich ist durch Polymerisation von 20 bis 80 Gew.-% der Komponenten (A2) und (A3), bezogen auf die Summe der Gewichtsprozente der Komponenten (A1), (A2) und (A3).

Es versteht sich von selbst, dass sich die Gewichtsprozente der Komponenten (A1), (A2) und (A3) auf die Gewichtsprozente der Komponenten (A1), (A2) und (A3) vor der Polymerisation beziehen, also wenn die Komponenten (A1), (A2) und (A3) noch nicht miteinander reagiert haben. Während der Polymerisation der Komponenten (A1), (A2) und (A3) kann sich das Gewichtsverhältnis der Komponenten (A1), (A2) und (A3) gegebenenfalls ändern.

Es werden bevorzugt im Bereich von 45 bis 55 mol-% der Komponente (A2) und im Bereich von 45 bis 55 mol-% der Komponente (A3), jeweils bezogen auf die Summe der mol-% der Komponenten (A2) und (A3) polymerisiert.

Besonders bevorzugt werden im Bereich von 47 bis 53 mol-% der Komponente (A2) und im Bereich von 47 bis 53 mol-% der Komponente (A3), jeweils bezogen auf die Summe der mol-% der Komponenten (A2) und (A3), polymerisiert.

Am meisten bevorzugt werden im Bereich von 49 bis 51 mol-% der Komponente (A2) und im Bereich von 49 bis 51 mol-% der Komponente (A3), jeweils bezogen auf die Summe der mol-% der Komponenten (A2) und (A3), polymerisiert.

Es ist also am meisten bevorzugt, dass die Komponenten (A2) und (A3) in einem molaren Verhältnis von 1:1 zueinander polymerisiert werden.

Es versteht sich von selbst, dass sich die mol-% der Komponenten (A2) und (A3) auf die mol-% der Komponenten (A2) und (A3) beziehen bevor diese miteinander reagiert haben. Während der Polymerisation der Komponenten (A1), (A2) und (A3) kann sich das molare Verhältnis der Komponenten (A2) und (A3) zueinander gegebenenfalls ändern.

Zur Herstellung der Copolyamids kann zusätzlich zu der Komponente (A) eine Komponente (A1a), mindestens ein zusätzliches Lactam, polymerisiert werden. Es versteht sich von selbst, dass das mindestens eine zusätzliche Lactam von Caprolactam verschieden ist.

Die Begriffe "Komponente (A1a)" und "mindestens ein zusätzliches Lactam" werden im Rahmen der vorliegenden Erfindung synonym gebraucht und besitzen daher die gleiche Bedeutung.

"Mindestens ein zusätzliches Lactam" bedeutet im Rahmen der vorliegenden Erfindung sowohl genau ein zusätzliches Lactam als auch eine Mischung aus zwei oder mehreren zusätzlichen Lactamen.

Geeignete zusätzliche Lactame sind dem Fachmann bekannt. Erfindungsgemäß bevorzugt als das mindestens eine zusätzliche Lactam sind Lactame mit 4 bis 12 Kohlenstoffatomen.

Unter "Lactamen" werden im Rahmen der vorliegenden Erfindung zyklische Amide verstanden, die im Ring vorzugsweise 4 bis 12, besonders bevorzugt 5 bis 8 Kohlenstoffatome aufweisen.

Geeignete zusätzliche Lactame sind beispielsweise ausgewählt aus der Gruppe bestehend aus 3-Aminopropansäurelactam (Propio-3-Lactam; β-Lactam; β-Propiolactam), 4-Aminobutansäurelactam (Butyro-4-Lactam; γ-Lactam; γ-Butyrolactam), 5-Aminopentansäurelactam (2-Piperidinon; δ-Lactam; δ-Valerolactam), 7-Aminoheptansäurelactam (Heptano-7-Lactam; ζ-Lactam; ζ-Heptanolactam), 8-Aminooktansäurelactam (Oktano-8-Lactam; η-Oktanolactam), 9-Aminononansäurelactam (Nonano-9-Lactam; θ-Lactam; θ-Nonanolactam), 10-Aminodekansäurelactam (Dekano-10-Lactam; ω-Dekanolactam), 11-Aminoundekansäurelactam (Undekano-11-Lactam; ω-Undekanolactam) und 12-Aminododekansäurelactam (Dodekano-12-Lactam; ω-Dodekanolactam).

Bevorzugt wird keine Komponente (A1a) polymerisiert zur Herstellung des Copolyamids.

Erfindungsgemäß wird das Copolyamid hergestellt durch Polymerisation der Komponenten (A1), (A2) und (A3) sowie gegebenenfalls (A1a). Die Polymerisation der Komponenten (A1), (A2) und (A3) sowie gegebenenfalls (A1a) ist dem Fachmann bekannt. Üblicherweise ist die Polymerisation der Komponente (A1) sowie gegebenenfalls (A1a) mit den Komponenten (A2) und (A3) eine Kondensationsreaktion. Während der Kondensationsreaktion reagiert die Komponente (A1) sowie gegebenenfalls (A1a) mit den Komponenten (A2) und (A3). Dabei bilden sich Amidbindungen zwischen den einzelnen Komponenten aus. Üblicherweise liegt die Komponente (A1) während der Polymerisation zumindest teilweise offenkettig, also als ε-Aminocapronsäure vor.

Die Polymerisation der Komponenten (A1), (A2) und (A3) sowie gegebenenfalls (A1a) kann in Gegenwart eines Katalysators stattfinden. Als Katalysator eignen sich alle dem Fachmann bekannten Katalysatoren, die die Polymerisation der Komponenten (A1), (A2) und (A3) sowie gegebenenfalls (A1a) katalysieren. Derartige Katalysatoren sind dem Fachmann bekannt. Bevorzugte Katalysatoren sind Phosphorverbindungen wie beispielsweise Natriumhypophosphit, phosphorige Säure, Triphenylphosphin oder Triphenylphosphit.

Bei der Polymerisation der Komponenten (A1), (A2) und (A3) sowie gegebenenfalls (A1a) bildet sich das Copolyamid, das daher Baueinheiten enthält, die von der Komponente (A1) abgeleitet sind, Baueinheiten, die von der Komponente (A2) abgeleitet sind, und Baueinheiten, die von der Komponente (A3) abgeleitet sind sowie gegebenenfalls Baueinheiten, die von der Komponente (A1a) abgeleitet sind.

Bei der Polymerisation der Komponenten (A1), (A2) und (A3) sowie gegebenenfalls (A1a) bildet sich das Copolyamid als Copolymer. Das Copolymer kann ein statistisches Copolymer sein, ebenso ist es möglich, dass es sich um ein Blockcopolymer handelt.

In einem Blockcopolymer bilden sich Blöcke von Einheiten, die von den Komponenten (A2) und (A3) abgeleitet sind, und Blöcke von Einheiten, die von der Komponente (A1) abgeleitet sind. Diese wechseln sich ab.

Bei einem statistischen Copolymer wechseln sich Baueinheiten, die von der Komponente (A1) abgeleitet sind, mit Baueinheiten, die von den Komponenten (A2) und (A3) abgeleitet sind, ab. Diese Abwechslung erfolgt statistisch. Beispielsweise kann auf zwei von den Komponenten (A2) und (A3) abgeleitete Baueinheiten eine Baueinheit, die von der Komponente (A1) abgeleitet ist, folgen, auf die wiederum eine von den Komponenten (A2) und (A3) abgeleitete Baueinheit folgt, auf die dann drei Baueinheiten folgen, die von der Komponente (A1) abgeleitet sind.

Die Herstellung des Copolyamids umfasst bevorzugt die folgenden Schritte:
i) Polymerisation der Komponenten (A1), (A2) und (A3) unter Erhalt eines ersten Copolyamids,
ii) Granulieren des in Schritt i) erhaltenen ersten Copolyamids unter Erhalt eines granulierten Copolyamids,
iii) Extraktion des in Schritt ii) erhaltenen granulierten Copolyamids mit Wasser unter Erhalt eines extrahierten Copolyamids,
iv) Trocknen des in Schritt iii) erhaltenen extrahierten Copolyamids bei einer Temperatur (T_{T}) unter Erhalt des Copolyamids.

Die Polymerisation in Schritt i) kann in allen dem Fachmann bekannten Reaktoren stattfinden, bevorzugt sind Rührkesselreaktoren. Es können zusätzlich dem Fachmann bekannte Hilfsmittel zur Verbesserung der Reaktionsführung, wie beispielsweise Entschäumer wie Polydimethylsiloxan (PDMS), eingesetzt werden.

In Schritt ii) kann das in Schritt i) erhaltene erste Copolyamid nach allen dem Fachmann bekannten Methoden granuliert werden, beispielsweise mittels Stranggranulierung oder Unterwassergranulierung.

Die Extraktion in Schritt iii) kann nach allen dem Fachmann bekannten Methoden erfolgen. Während der Extraktion in Schritt iii) werden üblicherweise während der Polymerisation der Komponenten (A1), (A2) und (A3) in Schritt i) gebildete Nebenprodukte aus dem granulierten Copolyamid extrahiert.

In Schritt iv) wird das in Schritt iii) erhaltene extrahierte Copolyamid getrocknet. Verfahren zum Trocknen sind dem Fachmann bekannt. Erfindungsgemäß wird das extrahierte Copolyamid bei einer Temperatur (T_{T}) getrocknet. Die Temperatur (T_{T}) liegt vorzugsweise oberhalb der Glasübergangstemperatur (T_{G(A)}) des Copolyamids und unterhalb der Schmelztemperatur (T_{M(A)}) des Copolyamids.

Bevorzugt liegt die Temperatur (T_{T}) oberhalb von 120 °C und unterhalb der Schmelztemperatur (T_{M(A)}) des Copolyamids.

Die Trocknung in Schritt iv) erfolgt üblicherweise in einem Zeitraum im Bereich von 1 bis 100 Stunden, bevorzugt im Bereich von 2 bis 50 Stunden und insbesondere bevorzugt im Bereich von 3 bis 40 Stunden.

Es besteht die Vorstellung, dass durch das Trocknen in Schritt iv) das Molekulargewicht des Copolyamids weiter erhöht wird.

Das Copolyamid weist üblicherweise eine Glasübergangstemperatur (T_{G(A)}) auf. Die Glasübergangstemperatur (T_{G(A)}) liegt beispielsweise im Bereich von 10 bis 90 °C, bevorzugt im Bereich von 20 bis 70 °C und insbesondere bevorzugt im Bereich von 25 bis 50 °C, bestimmt gemäß ISO 11357-2:2014.

Gegenstand der vorliegenden Erfindung ist daher auch ein Laminat, bei dem das Copolyamid eine Glasübergangstemperatur (T_{G(A)}) aufweist, wobei die Glasübergangstemperatur (T_{G(A)}) im Bereich von 10 bis 90 °C liegt.

Die Glasübergangstemperatur (T_{G(A)}) des Copolyamids bezieht sich entsprechend der ISO 11357-2:2014 im Rahmen der vorliegenden Erfindung auf die Glasübergangstemperatur (T_{G(A)}) des trockenen Copolyamids.

"Trocken" bedeutet im Rahmen der vorliegenden Erfindung, dass das Copolyamid weniger als 1 Gew.-%, bevorzugt weniger als 0,5 Gew.-% und insbesondere bevorzugt weniger als 0,1 Gew.-% Wasser enthält, bezogen auf das Gesamtgewicht des Copolyamids. Mehr bevorzugt bedeutet "trocken", dass das Copolyamid kein Wasser enthält, und am meisten bevorzugt, dass das Copolyamid kein Lösungsmittel enthält.

Das Copolyamid weist darüber hinaus üblicherweise eine Schmelztemperatur (T_{M(A)}) auf. Die Schmelztemperatur (T_{M(A)}) des Copolyamids liegt beispielsweise im Bereich von 180 bis 215 °C, bevorzugt im Bereich von 170 bis 210 °C und insbesondere bevorzugt im Bereich von 180 bis 200 °C, bestimmt gemäß ISO 11357-3:2014.

Gegenstand der vorliegenden Erfindung ist daher auch ein Laminat, bei dem das Copolyamid eine Schmelztemperatur (T_{M(A)}), die im Bereich von 180 bis 215 °C liegt, aufweist.

Das Copolyamid weist im Allgemeinen eine Viskositätszahl (VZ_{(A)}) im Bereich von 100 bis 300 ml/g auf, bestimmt in einer 0,5-gewichtsprozentigen Lösung des Copolyamids in einer Mischung aus Phenol/o-Dichlorbenzol im Gewichtsverhältnis 1 : 1.

Bevorzugt liegt die Viskositätszahl (VZ_{(A)}) des Copolyamids im Bereich von 160 bis 290 ml/g und besonders bevorzugt im Bereich von 170 bis 280 ml/g, bestimmt in einer 0,5-gewichtsprozentigen Lösung des Copolyamids in einer Mischung aus Phenol/o-Dichlorbenzol im Gewichtsverhältnis 1 : 1.

Das Copolyamid weist vorzugsweise eine Amidfunktionenkonzentration im Bereich von 3,5 bis 7 Amidgruppen / 1000 g/mol auf, besonders bevorzugt im Bereich von 4 bis 6,5 Amidgruppen / 1000 g/mol und insbesondere bevorzugt im Bereich von 4,5 bis 6 Amidgruppen / 1000 g/mol.

Gegenstand der vorliegenden Erfindung ist daher auch ein Laminat, bei dem das Copolyamid eine Amidfunktionenkonzentration im Bereich von 3,5 bis 7 Amidgruppen / 1000 g/mol aufweist.

Die Amidfunktionenkonzentration wird rechnerisch ermittelt. Hierzu wird über das Molekulargewicht der einzelnen Baueinheiten des Copolyamids gemittelt. 1000 dividiert durch das gemittelte Molekulargewicht ergibt dann die Amidfunktionenkonzentration.

Beispielsweise ist das gemittelte Molekulargewicht der einzelnen Baueinheiten von Polyamid 6 (PA 6) 113 g/mol. Die Amidfunktionenkonzentration ergibt sich dann als 1000 / 113 g/mol = 8,85 Amidgruppen / 1000 g/mol.

Beispielsweise ist das gemittelte Molekulargewicht der einzelnen Baueinheiten von Polyamid 6.36 (PA 6.36) 323 g/mol. Die Amidfunktionenkonzentration ergibt sich dann als 1000 / 323 g/mol = 3,10 Amidgruppen / 1000 g/mol.

Beispielsweise ist das gemittelte Molekulargewicht der einzelnen Baueinheiten von Polyamid 6/6.36 (PA 6/6.36) mit 40 Gew.-% 6.36-Baueinheiten 0,6 * PA 6 + 0,4 * PA 6.36 = 0,6 * 113 g/mol + 0,4 * 323 g/mol = 197 g/mol. Die Amidfunktionenkonzentration ergibt sich dann als 1000 / 197 g/mol = 5,08 Amidgruppen / 1000 g/mol.

Beispielsweise ist das gemittelte Molekulargewicht von Polyamid 66 (PA 66) 113 g/mol. Für Polyamid 6/66 ergibt sich dann, unabhängig vom Anteil an PA 6- und PA 66-Einheiten, eine Amidfunktionenkonzentration von 1000 / g/mol = 8,85 Amidgruppen / 1000 g/mol.

Das erfindungsgemäße Copolyamid weist außerdem nach Lagerung für 14 Tage bei 70 °C und 62 % relativer Luftfeuchte, bevorzugt im Bereich von 1,0 bis 2,7 Gew.-% Wasser auf, besonders bevorzugt im Bereich von 1,3 bis 2,5 Gew.-% und am meisten bevorzugt im Bereich von 1,5 bis 2,3 Gew.-%, jeweils bezogen auf das Gesamtgewicht des Copolyamids nach Lagerung für 14 Tage bei 70 °C und 62 % relativer Luftfeuchtigkeit.

### Komponente (A1)

Erfindungsgemäß ist die Komponente (A1) Caprolactam. Caprolactam ist dem Fachmann bekannt und wird auch als ε-Caprolactam, ε-Lactam, Hexano-6-Lactam oder Hexahydro-2H-azepin-2-on bezeichnet. Caprolactam ist das zyklische Amid der ε-Aminocapronsäure und trägt die CAS-Nr. 105-60-2.

### Komponente (A2)

Erfindungsgemäß ist die Komponente (A2) mindestens eine C₄-C₄₀-Disäure.

"Mindestens eine C₄-C₄₀-Disäure" bedeutet im Rahmen der vorliegenden Erfindung sowohl genau eine C₄-C₄₀-Disäure als auch eine Mischung aus zwei oder mehreren C₄-C₄₀-Disäuren.

Unter "C₄-C₄₀-Disäuren" werden im Rahmen der vorliegenden Erfindung aliphatische und/oder aromatische Verbindungen, welche gesättigt oder ungesättigt sind, mit 2 bis 38 Kohlenstoffatomen und zwei Carboxygruppen (-COOH-Gruppen) verstanden. Die 2 bis 38 Kohlenstoffatome können in der Hauptkette oder in Seitenketten angeordnet sein sein. Die C₄-C₄₀-Disäuren können also verzweigt oder unverzweigt oder cycloaliphatisch sein.

Beispielsweise ist die mindestens eine C₄-C₄₀-Disäure Butandisäure (Bernsteinsäure), Pentandisäure (Glutarsäure), Hexandisäure (Adipinsäure), Heptansäure (Pimelinsäure), Oktandisäure (Korksäure, Subarinsäure), Nonandisäure (Azelainsäure), Dekandisäure (Sebazinsäure), Undekandisäure, Dodekandisäure, Tridekandisäure, Tetradekandisäure oder Hexadekandisäure.

Bevorzugt ist die Komponente (A2) ausgewählt aus der Gruppe bestehend aus Hexandisäure, Dekandisäure und Dodekandisäure.

Weiterhin bevorzugt ist die Komponente (A2) mindestens eine C₃₂-C₄₀-Disäure.

Bevorzugt ist die Komponente also ausgewählt aus der Gruppe bestehend aus Hexandisäure, Dekandisäure, Dodekandisäure und C₃₂-C₄₀-Disäuren.

Eine "C₃₂-C₄₀-Disäure" wird auch als "C₃₂-C₄₀-Dimersäure" oder als "C₃₂-C₄₀-Dimerfettsäure" bezeichnet. Die Begriffe "C₃₂-C₄₀-Disäure", "C₃₂-C₄₀-Dimersäure" und "C₃₂-C₄₀-Dimerfettsäure" werden daher im Rahmen der vorliegenden Erfindung synonym gebraucht und besitzen daher die gleiche Bedeutung.

C₃₂-C₄₀-Dimersäuren sind dem Fachmann als solche bekannt und werden üblicherweise hergestellt durch Dimerisierung ungesättigter Fettsäuren. Diese Dimerisierung kann beispielsweise durch Tonerden katalysiert werden.

Geeignete ungesättigte Fettsäuren zur Herstellung der mindestens einen C₃₂-C₄₀-Dimersäure sind dem Fachmann bekannt und beispielsweise ungesättigte C₁₆-Fettsäuren, ungesättigte C₁₈-Fettsäuren und ungesättigte C₂₀-Fettsäuren.

Bevorzugt wird die Komponente (A2) daher hergestellt ausgehend von ungesättigten Fettsäuren, ausgewählt aus der Gruppe bestehend aus ungesättigten C₁₆-Fettsäuren, ungesättigten C₁₈-Fettsäuren und ungesättigten C₂₀-Fettsäuren, wobei die ungesättigten C₁₈-Fettsäuren besonders bevorzugt sind.

Gegenstand der vorliegenden Erfindung ist daher auch ein Laminat, bei dem die Komponente (A2) hergestellt wird ausgehend von ungesättigten Fettsäuren, ausgewählt aus der Gruppe bestehend aus ungesättigten C₁₆-Fettsäuren, ungesättigten C₁₈-Fettsäuren und ungesättigten C₂₀-Fettsäuren.

Eine geeignete ungesättigte C₁₆-Fettsäure ist beispielsweise Palmitoleinsäure ((9Z)-Hexadeca-9-ensäure).

Geeignete ungesättigte C₁₈-Fettsäuren sind beispielsweise ausgewählt aus der Gruppe bestehend aus Petroselinsäure ((6Z)-Oktadeka-6-ensäure), Ölsäure ((9Z)-Oktadeka-9-ensäure), Elaidinsäure ((9E)-Oktadeka-9-ensäure), Vaccensäure ((11E)-Oktadeka-11-ensäure), Linolsäure ((9Z,12Z)-Oktadeka-9,12-diensäure), α-Linolensäure ((9Z,12Z,15Z)-Oktadeka-9,12,15-triensäure), γ-Linolensäure ((6Z,9Z,12Z)-Oktadeka-6,9,12-triensäure), Calendulasäure ((8E,10E,12Z)-Oktadeka-8,10,12-triensäure), Punicinsäure ((9Z,11E,13Z)-Oktadeka-9,11,13-triensäure), α-Elaeostearinsäure ((9Z,11E,13E)-Oktadeka-9,11,13-triensäure) und β-Elaeostearinsäure ((9E,11E,13E)-Oktadeka-9,11,13-triensäure). Besonders bevorzugt sind ungesättigte C₁₈-Fettsäuren ausgewählt aus der Gruppe bestehend aus Petroselinsäure ((6Z)-Oktadeka-6-ensäure), Ölsäure ((9Z)-Oktadeka-9-ensäure), Elaidinsäure ((9E)-Oktadeka-9-ensäure), Vaccensäure ((11E)-Oktadeka-11-ensäure), Linolsäure ((9Z,12Z)-Oktadeka-9,12-diensäure).

Geeignete ungesättigte C₂₀-Fettsäuren sind beispielsweise ausgewählt aus der Gruppe bestehend aus Gadoleinsäure ((9Z)-Eicosa-9-ensäure), Icosensäure ((11Z)-Eicosa-11-ensäure), Arachidonsäure ((5Z,8Z,11Z,14Z)-Eicosa-5,8,11,14-tetraen-säure) und Timnodonsäure ((5Z,8Z,11Z,14Z,17Z)-Eicosa-5,8,11,14,17-pentaensäure).

Die Komponente (A2) ist insbesondere bevorzugt mindestens eine C₃₆-Dimersäure.

Die mindestens eine C₃₆-Dimersäure wird bevorzugt hergestellt ausgehend von ungesättigten C₁₈-Fettsäuren. Besonders bevorzugt wird die C₃₆-Dimersäure hergestellt ausgehend von C₁₈-Fettsäuren, ausgewählt aus der Gruppe bestehend aus Petroselinsäure ((6Z)-Oktadeka-6-ensäure), Ölsäure ((9Z)-Oktadeka-9-ensäure), Elaidinsäure ((9E)-Oktadeka-9-ensäure), Vaccensäure ((11E)-Oktadeka-11-ensäure) und Linolsäure ((9Z,12Z)-Oktadeka-9,12-diensäure).

Bei der Herstellung der Komponente (A2) aus ungesättigten Fettsäuren können sich zudem Trimersäuren bilden, außerdem können Reste an nicht reagierter ungesättigter Fettsäure übrig bleiben.

Die Bildung von Trimersäuren ist dem Fachmann bekannt.

Erfindungsgemäß bevorzugt enthält die Komponente (A2) höchstens 0,5 Gew.-% nicht reagierter ungesättigter Fettsäure und höchstens 0,5 Gew.-% Trimersäure, besonders bevorzugt höchstens 0,2 Gew.-% nicht reagierter ungesättigter Fettsäure und höchstens 0,2 Gew.-% Trimersäure, jeweils bezogen auf das Gesamtgewicht der Komponente (A2).

Als Dimersäuren (auch bekannt als dimerisierte Fettsäuren oder Dimerfettsäuren) werden allgemein und insbesondere im Rahmen der vorliegenden Erfindung also Gemische bezeichnet, die durch Oligomerisierung von ungesättigten Fettsäuren hergestellt werden. Sie sind beispielsweise herstellbar durch katalytische Dimerisierung von pflanzlichen, ungesättigten Fettsäuren, wobei als Ausgangsstoffe insbesondere ungesättigte C₁₆- bis C₂₀-Fettsäuren eingesetzt werden. Die Verknüpfung verläuft vornehmlich nach dem Diels-Alder-Typ und es resultieren, je nach Zahl und Lage der Doppelbindungen der zur Herstellung der Dimersäuren eingesetzten Fettsäuren, Gemische aus vornehmlich dimeren Produkten, die zwischen den Carboxylgruppen cycloaliphatische, linear-aliphatische, verzweigt aliphatische und auch C₆-aromatische Kohlenwasserstoffgruppen aufweisen. Je nach Mechanismus und/oder gegebenenfalls nachträglicher Hydrierung können die aliphatischen Reste gesättigt oder ungesättigt sein und auch der Anteil von aromatischen Gruppen kann variieren. Die Reste zwischen den Carbonsäuregruppen enthalten dann beispielsweise 32 bis 40 Kohlenstoffatome. Bevorzugt werden zur Herstellung Fettsäuren mit 18 Kohlenstoffatomen eingesetzt, sodass das dimere Produkt also 36 Kohlenstoffatome aufweist. Vorzugsweise weisen die Reste, welche die Carboxylgruppen der Dimerfettsäuren verbinden, keine ungesättigten Bindungen und keine aromatischen Kohlenwasserstoffreste auf.

Im Sinne der vorliegenden Erfindung werden bei der Herstellung also bevorzugt C₁₈-Fettsäuren eingesetzt. Besonders bevorzugt werden Linolen-, Linol- und/oder Ölsäure eingesetzt.

In Abhängigkeit von der Reaktionsführung entstehen bei der oben bezeichneten Oligomerisierung Gemische, die hauptsächlich dimere, aber auch trimere Moleküle sowie monomere Moleküle und sonstige Nebenprodukte enthalten. Üblicherweise wird destillativ gereinigt. Handelsübliche Dimersäuren enthalten im Allgemeinen mindestens 80 Gew.-% dimere Moleküle, bis zu 19 Gew.-% trimere Moleküle und maximal 1 Gew. % monomerer Moleküle und sonstiger Nebenprodukte.

Es ist bevorzugt, Dimersäuren einzusetzen, die zu mindestens 90 Gew.-%, bevorzugt zu mindestens 95 Gew.-%, ganz besonders bevorzugt zu mindestens 98 Gew.-% aus dimeren Fettsäuremolekülen bestehen.

Die Bestimmung der Anteile von monomeren, dimeren und trimeren Molekülen sowie sonstigen Nebenprodukten in den Dimersäuren kann beispielsweise mittels Gaschromatografie (GC) erfolgen. Dabei werden die Dimersäuren vor der GC- Analyse über die Bortrifluorid-Methode zu den entsprechenden Methylestern umgesetzt (vergleiche DIN EN ISO 5509) und dann mittels GC analysiert.

Als grundlegendes Kennzeichen für "C₃₂-C₄₀-Dimersäuren" gilt im Rahmen der vorliegenden Erfindung also, dass deren Herstellung die Oligomerisierung von ungesättigten Fettsäuren umfasst. Bei dieser Oligomerisierung entstehen vornehmlich, das heißt bevorzugt, zu mindestens 80 Gew.-%, besonders bevorzugt zu mindestens 90 Gew.-%, ganz besonders bevorzugt zu mindestens 95 Gew.-% und insbesondere zu mindestens 98 Gew.-% dimere Produkte. Die Tatsache, dass bei der Oligomerisierung also überwiegend dimere Produkte entstehen, die genau zwei Fettsäuremoleküle enthalten, rechtfertigt diese ohnehin gängige Benennung. Ein alternativer Ausdruck für den einschlägigen Begriff "Dimersäuren" ist also "Gemisch enthaltend dimerisierte Fettsäuren".

Die einzusetzenden Dimersäuren sind als Handelsprodukte zu erhalten. Zu nennen sind beispielsweise Radiacid 0970, Radiacid 0971, Radiacid 0972, Radiacid 0975, Radiacid 0976 und Radiacid 0977 der Firma Oleon, Pripol 1006, Pripol 1009, Pripol 1012, und Pripol 1013 der Firma Croda, Empol 1008, Empol 1012, Empol 1061 und Empol 1062 der Firma BASF SE sowie Unidyme 10 und Unidyme TI der Firma Arizona Chemical.

Die Komponente (A2) weist beispielsweise eine Säurezahl im Bereich von 190 bis 200 mg KOH/g auf.

### Komponente (A3)

Die Komponente (A3) ist erfindungsgemäß mindestens ein C₄-C₂₀-Diamin.

"Mindestens ein C₄-C₂₀-Diamin" bedeutet im Rahmen der vorliegenden Erfindung sowohl genau ein C₄-C₂₀-Diamin, als auch eine Mischung aus zwei oder mehreren C₄-C₂₀-Diaminen.

Bevorzugt ist die Komponente (A3) mindestens ein C₄-C₁₂-Diamin.

Unter "C₄-C₂₀-Diamin" werden im Rahmen der vorliegenden Erfindung aliphatische und/oder aromatische Verbindungen mit 4 bis 20 Kohlenstoffatomen und zwei Aminogruppen (NH₂-Gruppen) verstanden. Die aliphatischen und/oder aromatischen Verbindungen können unsubstituiert oder zusätzlich zumindest monosubstituiert sein. Für den Fall, dass die aliphatischen und/oder aromatischen Verbindungen zusätzlich zumindest monosubstituiert sind, können sie ein, zwei oder mehrere Substituenten tragen, die an der Polymerisation der Komponenten (A1), (A2) und (A3) nicht teilnehmen. Derartige Substituenten sind beispielsweise Alkyl- oder Cycloalkylsubstituenten. Diese sind dem Fachmann als solche bekannt. Bevorzugt ist das mindestens eine C₄-C₂₀-Diamin unsubstituiert. Entsprechende Ausführungen gelten für C₄-C₁₂-Diamin.

Geeignete Komponenten (A3) sind beispielsweise ausgewählt aus der Gruppe bestehend aus 1,4-Diaminobutan (Butan-1,4-Diamin; Tetrametylendiamin; Putrescin), 1,5-Diaminopentan (Pentametylendiamin; Pentan-1,5-Diamin; Cadaverin), 1,6-Diaminohexan (Hexamethylendiamin; Hexan-1,6-Diamin), 1,7-Diaminoheptan, 1,8-Diaminooktan, 1,9-Diaminononan, 1,10-Diaminodekan (Dekamethylendiamin), 1,11-Diaminoundekan (Undecamethylendiamin) und 1,12-Diaminododekan (Dodecamethylendiamin).

Bevorzugt ist die Komponente (A3) ausgewählt aus der Gruppe bestehend aus Tetrametylendiamin, Pentametylendiamin, Hexamethylendiamin, Dekamethylendiamin und Dodekamethylendiamin.

### Komponente (B)

Erfindungsgemäß enthält die Polymerzusammensetzung (PZ) als Komponente (B) mindestens ein Copolymer, erhältlich durch Polymerisation mindestens der Komponenten (B1) mindestens ein C₂-C₂₀-Alken und (B2) mindestens ein C₂-C₁₈-Alkenylester.

"Mindestens ein C₂-C₂₀-Alken" bedeutet im Rahmen der vorliegenden Erfindung sowohl genau ein C₂-C₂₀-Alken, als auch eine Mischung aus zwei oder mehreren C₂-C₂₀-Alkenen.

"Mindestens ein C₂-C₁₈-Alkenylester" bedeutet im Rahmen der vorliegenden Erfindung sowohl genau ein C₂-C₁₈-Alkenylester, als auch eine Mischung aus zwei oder mehreren C₂-C₁₈-Alkenylestern.

Im Rahmen der vorliegenden Erfindung werden die Begriffe "Komponente (B1)" und "mindestens ein C₂-C₂₀-Alken" synonym gebraucht und besitzen daher die gleiche Bedeutung. Ebenso werden die Begriffe "Komponente (B2)" und "mindestens ein C₂-C₁₈-Alkenylester" im Rahmen der vorliegenden Erfindung synonym gebraucht und besitzen daher die gleiche Bedeutung.

Erfindungsgemäß ist die Komponente (B1) mindestens ein C₂-C₂₀-Alken.

Unter einem "C₂-C₂₀-Alken" werden im Rahmen der vorliegenden Erfindung unsubstituierte oder zumindest monosubstituierte Kohlenwasserstoffe mit 2 bis 20 Kohlenstoffatomen verstanden und zumindest einer Kohlenstoff-Kohlenstoff-Doppelbindung (C-C-Doppelbindung). Anders ausgedrückt bedeutet dies, dass C₂-C₂₀-Alkene ungesättigte Kohlenwasserstoffe mit 2 bis 20 Kohlenstoffatomen sind. Die Kohlenwasserstoffe können verzweigt oder unverzweigt sein.

Beispiele für C₂-C₂₀-Alkene mit einer C-C-Doppelbindung sind Ethen, Propen, 1-Buten, 2-Buten, 2-Methylpropen (Isobutylen), 1-Penten, 2-Penten, 2-Methyl-1-Buten, 3-Methyl-1-Buten, 1-Hexen, 2-Hexen, 3-Hexen und 4-Methyl-1-Penten. Beispiele für C₂-C₂₀-Alkene mit 2 oder mehr C-C-Doppelbindungen sind Allen, 1,3-Butadien, 1,4-Pentadien, 1,3-Pentadien, 2-Methyl-1,3-Butadien (Isopren).

Bevorzugt ist die Komponente (B1) mindestens ein C₂-C₁₀-Alken und insbesondere bevorzugt mindestens ein C₂-C₅-Alken.

Weiterhin bevorzugt ist die Komponente (B1) ausgewählt aus Ethen, Propen, 1-Buten und 2-Buten.

Gegenstand der vorliegenden Erfindung ist daher auch ein Laminat, bei dem die Komponente (B1) ausgewählt ist aus der Gruppe bestehend aus Ethen, Propen, 1-Buten und 2-Buten.

Erfindungsgemäß ist die Komponente (B2) mindestens ein C₂-C₁₈-Alkenylester.

Unter "C₂-C₁₈-Alkenylestern" werden im Rahmen der vorliegenden Erfindung Ester von ungesättigten C₂-C₁₈-Alkoholen mit Monocarbonsäuren verstanden.

Bevorzugt als Monocarbonsäuren sind C₁-C₁₈-Monocarbonsäuren, mehr bevorzugt C₁-C₁₅-Monocarbonsäuren und insbesondere bevorzugt C₁-C₉-Monocarbonsäuren.

Unter "C₁-C₁₈-Monocarbonsäuren" werden aliphatische und/oder aromatische Verbindungen, bevorzugt aliphatische Verbindungen verstanden, welche gesättigt oder ungesättigt, bevorzugt gesättigt, sind, und 1 bis 18 Kohlenstoffatome mit einer Carboxygruppe (-COOH-Gruppe) verstanden. Die 1 bis 18 Kohlenstoffatome können in der Hauptkette oder in Seitenketten angeordnet sein. Die C₁-C₁₈-Monocarbonsäuren können also verzweigt oder unverzweigt oder cycloaliphatisch sein. Entsprechende Ausführungen gelten für C₁-C₁₅-Monocarbonsäuren und C₁-C₉-Monocarbonsäuren.

Unter ungesättigten C₂-C₁₈-Alkoholen werden ungesättigte Kohlenwasserstoffe mit 2 bis 18 Kohlenstoffatomen und einer Hydroxygruppe (-OH-Gruppe) verstanden.

Erfindungsgemäß bevorzugt ist die Komponente (B2) ausgewählt aus der Gruppe bestehend aus Vinylestern und Propenylestern, besonders bevorzugt ist die Komponente (B2) mindestens ein Vinylester.

Gegenstand der vorliegenden Erfindung ist somit auch ein Laminat, bei dem die Komponente (B2) mindestens ein Vinylester ist.

Bevorzugt ist die Komponente (B2) ausgewählt aus der Gruppe, bestehend aus Vinylacetat, Vinylpropionat, Vinylbutyrat, Vinyl-2-Ethylhexanoat, Neopentansäurevinylester, Hexansäurevinylester, Neononansäurevinylester, Neodecansäurevinylester, Propenylacetat, Propenylpropionat, Propenylbutyrat, Propenyl-2-Ethylhexanoat, Neopentansäurepropenylester, Hexansäurepropenylester, Neononansäurepropenylester und Neodecansäurepropenylester.

Mehr bevorzugt ist die Komponente (B2) ausgewählt aus der Gruppe, bestehend aus Vinylacetat, Vinylpropionat, Vinylbutyrat, Vinyl-2-Ethylhexanoat, Neopentansäurevinylester, Hexansäurevinylester, Neononansäurevinylester und Neodecansäurevinylester.

Am meisten bevorzugt ist die Komponente (B2) Vinylacetat.

Gegenstand der vorliegenden Erfindung ist daher auch ein Laminat, bei dem die Komponente (B2) ausgewählt ist aus der Gruppe bestehend aus Vinylacetat, Vinylpropionat und Vinylbutyrat.

Die Polymerisation der Komponenten (B1) und (B2) unter Erhalt der Komponente (B) kann nach allen dem Fachmann bekannten Methoden durchgeführt werden. Üblicherweise werden die Komponenten (B1) und (B2) radikalisch miteinander polymerisiert. Bevorzugt liegt das molare Verhältnis der Komponenten (B1) und (B2) während der Polymerisation im Bereich von 45 : 55 bis 55 : 45.

Es ist möglich und in einer Ausführungsform der vorliegenden Erfindung erfindungsgemäß bevorzugt, im Anschluss an die Polymerisation der Komponenten (B1) und (B2) das dabei erhaltene Copolymer zu hydrolysieren. Dabei werden die vom C₂-C₁₈-Alkenylester stammenden Monocarbonsäuregruppen zumindest teilweise hydrolysiert unter Erhalt des Alkohols.

Dies ist dem Fachmann als solches bekannt.

Die Komponente (B) ist daher bevorzugt ausgewählt aus der Gruppe, bestehend aus Polyethylenvinylacetat, Polyethylenvinylalkohol und Ethylen-Vinylacetat-Vinylalkohol-Copolymeren.

Ethylen-Vinylacetat-Vinylalkohol-Copolymere sind besonders bevorzugt als Komponente (B).

Gegenstand der vorliegenden Erfindung ist daher auch ein Laminat, bei dem die Komponente (B) ausgewählt ist aus der Gruppe bestehend aus Polyethylenvinylacetat, Polyethylenvinylalkohol und Ethylen-Vinylacetat-Vinylalkohol-Copolymeren.

Ist die Komponente (B) ein Ethylen-Vinylacetat-Vinylalkohol-Copolymer, so enthält das Copolymer bevorzugt im Bereich von 1 bis 50 Gew.-%, besonders bevorzugt im Bereich von 2 bis 40 Gew.-% und am meisten bevorzugt im Bereich von 5 bis 30 Gew.-% an von Vinylacetat abgeleiteten Einheiten, bezogen auf das Gesamtgewicht des Ethylen-Vinylacetat-Vinylalkohol-Copolymer.

Die erfindungsgemäße Komponente (B) enthält bevorzugt Einheiten, die von Ethylen abgeleitet sind, sowie Einheiten, die Vinylacetat abgeleitet sind und/oder Einheiten, die von Vinylalkohol abgeleitet sind.

Bevorzugt enthält die Komponente (B) also Polyethyleneinheiten sowie Einheiten der allgemeinen Formel VII und/oder der allgemeinen Formel VIII 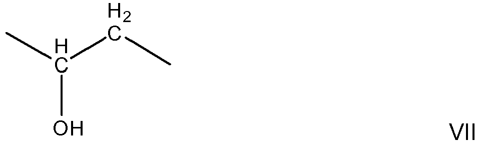 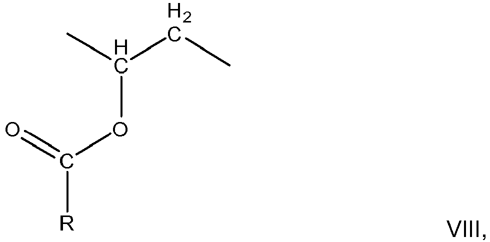 in der
- R: ausgewählt ist aus der Gruppe bestehend aus C₁-C₇-Alkyl, bevorzugt ausgewählt aus der Gruppe bestehend aus -CH₃, -C₂H₅, -C₃H₇, -C₇H₁₅, -C₄H₉ und -C₂H₅, insbesondere bevorzugt -CH₃.

Besonders bevorzugt enthält die Komponente (B) also Polyethyleneinheiten sowie Einheiten der allgemeinen Formel VII und der allgemeinen Formel VIII.

Gegenstand der vorliegenden Erfindung ist daher auch Laminat, bei dem die Komponente (B) Polyethyleneinheiten sowie Einheiten der allgemeinen Formel VII und/oder der allgemeinen Formel VIII enthält 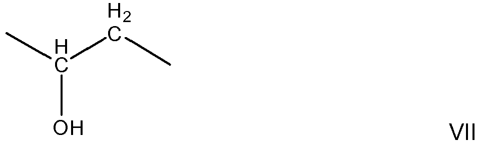 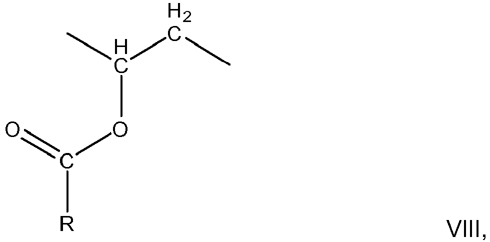 in der
- R: ausgewählt ist aus der Gruppe bestehend aus C₁-C₇-Alkyl, bevorzugt ausgewählt aus der Gruppe bestehend aus -CH₃, -C₂H₅, -C₃H₇, -C₇H₁₅, -C₄H₉ und -C₂H₅, insbesondere bevorzugt -CH₃.

Die Komponente (B) ist bevorzugt mindestens ein lineares Copolymer. Weiterhin bevorzugt ist die Komponente (B) kein Graft-Polymer.

### Komponente (C)

Erfindungsgemäß kann die Polymerzusammensetzung (PZ) eine Komponente (C), mindestens einen Kautschuk, enthalten.

Im Rahmen der vorliegenden Erfindung wird ein "Kautschuk" auch als "schlagzähmodifiziertes Polymer" oder als "kautschukelastisches Polymerisat" oder als "Elastomer" bezeichnet. Diese Begriffe werden daher im Rahmen der vorliegenden Erfindung synonym gebraucht und besitzen daher die gleiche Bedeutung.

Bevorzugt ist die Komponente (C) mindestens ein Polymerisat auf Basis von Olefinen.

Gegenstand der vorliegenden Erfindung ist daher auch ein Laminat, bei dem die Komponente (C) mindestens ein Polymerisat auf Basis von Olefinen ist.

Weiterhin bevorzugt ist die Komponente (C) kein Olefinhomopolymerisat. Anders ausgedrückt bedeutet dies, dass die Komponente (C) bevorzugt mindestens ein Polymerisat auf Basis von zwei oder mehreren Olefinen ist. "Auf Basis von zwei oder mehreren Olefinen" bedeutet im Rahmen der vorliegenden Erfindung, dass das Polymerisat erhältlich ist durch Polymerisation von zwei oder mehreren Olefinen.

Gegenstand der vorliegenden Erfindung ist daher auch ein Laminat, bei dem die Komponente (C) mindestens ein Polymerisat auf Basis von zwei oder mehreren Olefinen ist.

Bevorzugte Kautschuke sind Polymerisate auf Basis von Olefinen, die erhältlich sind durch Polymerisation der folgenden Komponenten:
(C1) im Bereich von 40 bis 100 Gew.-%, bevorzugt im Bereich von 55 bis 79,5 Gew.-% mindestens eines α-Olefins mit 2 bis 8 C-Atomen,
(C2) im Bereich von 0 bis 90 Gew.-% mindestens eines Diens,
(C3) im Bereich von 0 bis 45 Gew.-%, bevorzugt im Bereich von 20 bis 40 Gew.-% mindestens eines C₁-C₁₈-Alkylesters von Acrylsäure oder Methacrylsäure,
(C4) im Bereich von 0 bis 40 Gew.-%, bevorzugt im Bereich von 0,5 bis 20 Gew.-% mindestens einer ethylenisch ungesättigten Monocarbonsäure und/oder einer ethylenisch ungesättigten Dicarbonsäure oder einem Derivat mindestens einer ethylenisch ungesättigten Monocarbonsäure und/oder einer ethylenisch ungesättigten Dicarbonsäure,
(C5) im Bereich von 0 bis 40 Gew.-% mindestens eines Epoxygruppen enthaltenden Monomers,
(C6) im Bereich von 0 bis 5 Gew.-% sonstiger radikalisch polymerisierbarer Monomerer,
mit der Maßgabe, dass die Komponente (C) kein Olefinhomopolymerisat ist, wobei die Gew.-% jeweils bezogen sind auf die Summe der Gew.-% der Komponenten (C1), (C2), (C3), (C4), (C5) und (C6).

Die Gew.-% der Komponenten (C1), (C2), (C3), (C4), (C5) und (C6) beziehen sich auf die Gew.-% der Komponenten (C1), (C2), (C3), (C4), (C5) und (C6) bevor sie miteinander reagiert haben. Es versteht sich von selbst, dass sich während der Reaktion der Komponenten (C1), (C2), (C3), (C4), (C5) und (C6) miteinander, die Gew.-% gegebenenfalls ändern können.

Es versteht sich von selbst, dass die Komponenten (C1), (C2), (C3), (C4), (C5) und (C6) jeweils voneinander verschieden sind. Insbesondere ist die Komponente (C3) von der Komponente (C4) verschieden.

Durch Polymerisation der Komponenten (C1), (C2), (C3), (C4), (C5) und (C6) erhältliche Kautschuke werden im Rahmen der vorliegenden Erfindung auch als Olefinpolymerisate bezeichnet.

Bevorzugt als Kautschuk sind sogenannte Ethylen-Propylen-Kautschuke (EPM-Kautschuke) sowie Ethylen-Propylen-Dien-Kautschuke (EPDM-Kautschuke), die jeweils vorzugsweise ein Verhältnis von von Ethylen abgeleiteten Einheiten zu von Propylen abgeleiteten Einheiten im Bereich von 40:60 bis 90:10 aufweisen.

EPM-Kautschuke haben im Allgemeinen in der Poymerkette im Wesentlichen keine Doppelbindungen mehr, während EPDM-Kautschuke 1 bis 20 Doppelbindungen/100 C-Atome in der Polymerkette aufweisen können.

EPDM-Kautschuke sind beispielsweise erhältlich durch Polymerisation der Komponenten (C1) und (C2).

Die Komponente (C1) ist mindestens ein α-Olefin mit 2 bis 8 C-Atomen. "Mindestens ein α-Olefin mit 2 bis 8 C-Atomen" wird im Rahmen der vorliegenden Erfindung auch als "C₂-C₈-Alken" oder als "C₂-C₈-α-Olefin" bezeichnet.

Im Rahmen der vorliegenden Erfindung wird unter einem C₂-C₈-α-Olefin ein unsubstituierter oder zumindest monosubstituierter Kohlenwasserstoff verstanden mit 2 bis 8 Kohlenstoffatomen und mindestens einer Kohlenstoff-Kohlenstoff-Doppelbindung (C-C-Doppelbindung), wobei mindestens eine Kohlenstoff-Kohlenstoff-Doppelbindung in α-Position, also an der ersten Position, angeordnet ist. "Mindestens eine Kohlenstoff-Kohlenstoff-Doppelbindung" bedeutet im Rahmen der vorliegenden Erfindung sowohl genau eine Kohlenstoff-Kohlenstoff-Doppelbindung als auch zwei oder mehrere Kohlenstoff-Kohlenstoff-Doppelbindungen. Genau eine Kohlenstoff-Kohlenstoff-Doppelbindung ist bevorzugt.

Anders ausgedrückt bedeutet C₂-C₈-α-Olefin, dass die Kohlenwasserstoffe mit 2 bis 8 Kohlenstoffatomen ungesättigt sind. Die Kohlenwasserstoffe können verzweigt oder unverzweigt sein. Beispiele für C₂-C₈-α-Olefin mit genau einer C-C-Doppelbindung sind Ethen, Propen, 1-Buten, 2-Methylpropen (Isobutylen), 1-Penten, 2-Methyl-1-Buten, 3-Methyl-1-Buten, 1-Hexen und 4-Methyl-1-Penten.

Beispielsweise ist die Komponente (C1) ausgewählt aus der Gruppe bestehend aus Ethen, Propen, 1-Buten, 2-Methylpropen (Isobutylen), 1-Penten, 2-Methyl-1-Buten, 3-Methyl-1-Buten, 1-Hexen und 4-Methyl-1-Penten. Bevorzugt ist die Komponente (C1) ausgewählt aus der Gruppe bestehend aus Ethen, Propen, 1-Buten und 2-Methylpropen (Isobutylen) und am meisten bevorzugt ist die Komponente (C1) ausgewählt aus Ethen und Propen.

Die Komponente (C2) ist beispielsweise ausgewählt aus der Gruppe bestehend aus konjugierten Dienen, nicht-konjugierten Dienen mit 5 bis 25 C-Atomen, cyclischen Dienen, Alkenylnorbornenen und Tricyclodiene.

Geeignete konjugierte Diene sind beispielsweise Isopren oder Butadien. Geeignete nicht-konjugierte Diene mit 5 bis 25 C-Atomen sind beispielsweise Penta-1,4-dien, Hexa-1,4-dien, Hexa-1,5-dien, 2,5-Di-methylhexa-1,5-dien und Octa-1,4-dien. Geeignete cyclische Diene sind beispielsweise Cyclopentadien, Cyclohexadiene, Cyclooctadiene und Dicyclopentadien. Geeignete Alkenylnorbornene sind beispielsweise 5-Ethyliden-2-norbornen, 5-Butyliden-2-norbornen, 2-Methallyl-5-norbornen und 2-Isopropenyl-5-norbornen. Geeignete Tricyclodiene sind beispielsweise 3-Methyl-tricyclo(5.2.1.0.2.6)-3,8-decadien

Bevorzugt ist die Komponente (C2) ausgewählt aus der Gruppe bestehend aus Hexa-1,5-dien, 5-Ethyliden-Norbornen und Dicyclopentadien.

Der Diengehalt der EPDM-Kautschuke beträgt vorzugsweise 0,5 bis 50 Gew.-%, insbesondere 2 bis 20 Gew.-% und besonders bevorzugt 3 bis 15 Gew.-%, bezogen auf das Gesamtgewicht der Komponente (C). EPM- bzw. EPDM-Kautschuke können vorzugsweise auch mit reaktiven Carbonsäuren oder deren Derivaten gepfropft sein. Geeignete reaktive Carbonsäuren sind beispielsweise Acrylsäure, Methacrylsäure und deren Derivate sowie Maleinsäureanhydrid.

Weiterhin bevorzugte Komponenten (C) sind beispielsweise MBS-Kautschuke (Methacrylat/Butadien/Styrol-Kautschuke) aufgebaut aus:
65 bis 99 Gew.-% eines Kerns erhältlich durch Polymerisation von
   (C2) im Bereich von 90 bis 100 Gew.-% mindestens eines Diens und 0 bis 10 Gew.-% weiterer vernetzbarer Monomerer sowie
1 bis 35 Gew.-% einer Schale erhältlich durch Polymerisation von
   (C7) im Bereich von 1 bis 30 Gew.-% Styrol oder substituierter Styrole oder deren Mischungen und
   (C8) im Bereich von 70 bis 100 Gew.-% mindestens eines ungesättigten Nitrils.

Geeignete Monomere (C7) sind Styrole oder substituierte Styrole der allgemeinen Formel I sowie Mischungen aus diesen 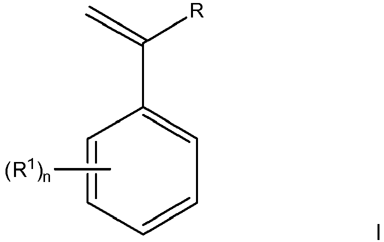 worin R einen C₁- bis C₈-Alkylrest, bevorzugt Methyl oder Ethyl, oder Wasserstoff bedeutet und R¹ einen C₁- bis C₈-Alkylrest, bevorzugt Methyl oder Ethyl, darstellt und n den Wert 1, 2 oder 3 hat.

Eine weitere Gruppe bevorzugter Olefinpolymerisate sind Copolymere von α-Olefinen mit 2 bis 8 C-Atomen, insbesondere des Ethylens, mit mindestens einem C₁-C₁₈-Alkylester von Acrylsäure oder Methacrylsäure (Komponente (C3)).

Grundsätzlich eignen sich alle primären, sekundären und tertiären C₁-C₁₈-Alkylester von Acrylsäure oder Methacrylsäure. Bevorzugt sind C₁-C₁₂-Alkylester, insbesondere bevorzugt sind C₂-C₁₀-Alkylester.

Beispiele hierfür sind Methylacrylat, Ethylacrylat, Propylacrylat, n-Butylacrylat, i-Butylacrylat, t-Butylacrylat, 2-Ethylhexylacrylat, Octylacrylate, Decylacrylate, Methylmethacrylat, Ethylmethacrylat, Propylmethacrylat, n-Butylmethacrylat, i-Butylmethacrylat, t-Butylmethacrylat, 2-Ethylhexylmethacrylat, Octylmethacrylate, Decylmethacrylate. Bevorzugt sind Methylacrylat, Ethylacrylat, Propylacrylat, n-Butylacrylat, i-Butylacrylat, t-Butylacrylat, 2-Ethylhexylacrylat, Octylacrylate und Decylacrylate. Insbesondere bevorzugt sind n-Butylacrylat und 2-Ethylhexylacrylat.

Der Anteil der Methacrylsäureester und Acrylsäureester (C3) an den Olefinpolymerisaten beträgt beispielsweise im Bereich von 0 bis 60 Gew.-%, vorzugsweise im Bereich von 10 bis 50 Gew.-% und insbesondere bevorzugt im Bereich von 30 bis 45 Gew.-%, jeweils bezogen auf die Summe der Gew.-% der Komponenten (C1) bis (C6).

Als Beispiele für die Komponente (C4) seien Dicarbonsäuren wie Maleinsäure und Fumarsäure oder Derivate dieser Säuren sowie deren Monoester genannt.

Die Komponente (C4) ist bevorzugt ein latent säurefunktionelles Monomer.

Als latent säurefunktionelle Monomere sollen solche Verbindungen verstanden werden, die bei der Polymerisation und/oder bei Einarbeitung der Komponente (C) in die Polymerzusammensetzung (PZ) freie Säuregruppen bilden. Als Beispiele hierfür seien Anhydride von Dicarbonsäuren mit bis zu 20 C-Atomen, insbesondere Maleinsäureanhydrid angeführt.

Beispielsweise ist die Komponente (C4) ausgewählt aus der Gruppe bestehend aus Verbindungen der allgemeinen Formeln II und III:

R¹(R²OOC)C=C(COOR³)R⁴ II

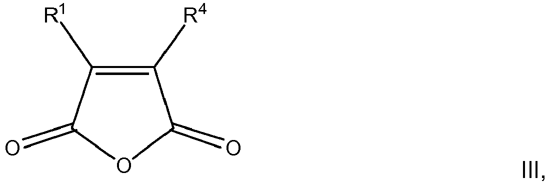

in denen
- R¹, R², R³, R⁴: unabhängig voneinander Wasserstoff oder Alkylgruppen mit 1 bis 6 C-Atomen darstellen.

Bevorzugt ist die Komponente (C4) daher ausgewählt aus der Gruppe bestehend aus Maleinsäure, Fumarsäure und Maleinsäureanhydrid.

Beispielsweise ist die Komponente (C5) ausgewählt aus der Gruppe bestehend aus Verbindungen der allgemeinen Formeln IV und V: 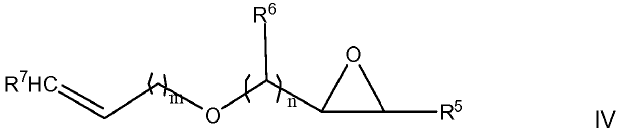 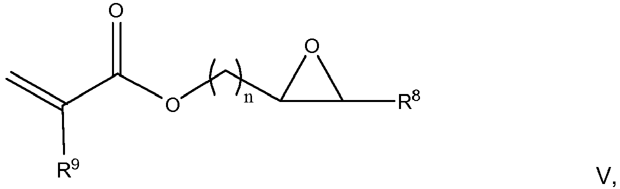 in denen
- R⁵, R⁶, R⁷, R⁸, R⁹: unabhängig voneinander Wasserstoff oder Alkylgruppen mit 1 bis 6 C-Atomen darstellen;
- m: eine ganze Zahl von 0 bis 20 und
- n: eine ganze Zahl von 0 bis 10 ist.

Bevorzugt sind R¹, R², R³, R⁴, R⁵, R⁶, R⁷, R⁸, R⁹ unabhängig voneinander Wasserstoff, m 0 oder 1 und n 1.

Bevorzugte Verbindungen der Formeln IV und V sind Epoxygruppen-enthaltende Ester der Acrylsäure und/oder Methacrylsäure, wobei Glycidylacrylat und Glycidylmethacrylat besonders bevorzugt werden.

Die Komponente (C5) ist bevorzugt ausgewählt aus der Gruppe bestehend aus Alkenylglycidylether und Vinylglycidylether.

Der Anteil der Komponenten (C4) bzw. (C5) beträgt jeweils bevorzugt 0,07 bis 40 Gew.-%, insbesondere 0,1 bis 20 Gew.-% und besonders bevorzugt 0,15 bis 15 Gew.-%, bezogen auf das Gesamtgewicht der Komponenten (C1) bis (C6).

Besonders bevorzugt als Komponente (C) sind Olefinpolymerisate erhältlich durch Polymerisation von
50 bis 98,9 Gew.-%, insbesondere 55 bis 65 Gew.-% Ethylen,
0,1 bis 20 Gew.-%, insbesondere 0,15 bis 10 Gew.-% Glycidylacrylat und/oder Glycidylmethacrylat, Acrylsäure und/oder Maleinsäureanhydrid,
1 bis 45 Gew.-%, insbesondere 25 bis 40 Gew.-% n-Butylacrylat und/oder 2-Ethylhexylacrylat, sowie
0 bis 10 Gew.-%, insbesondere 0,1 bis 3 Gew.-% Maleinsäureanhydrid oder Fumarsäure oder deren Mischungen,
wobei die Gew.-% jeweils bezogen sind auf die Summe der Gew.-% der zur Polymerisation eingesetzten Komponenten.

Als Komponente (C6) kommen z.B. Vinylester und Vinylether in Betracht.

Die Herstellung der vorstehend beschriebenen Olefinpolymerisate kann nach an sich bekannten Verfahren erfolgen, vorzugsweise durch statistische Copolymerisation unter hohem Druck und erhöhter Temperatur.

Der Schmelzindex der Olefinpolymerisate liegt im Allgemeinen im Bereich von 1 bis 80 g/10 min (gemessen bei 190 °C und 2,16 kg Belastung).

Weiterhin bevorzugt als Komponente (C) sind Acrylatkautschuke aufgebaut aus:
a) 70 bis 90 Gew.-% und vorzugsweise 75 bis 85 Gew.-% eines vernetzten elastomeren Kerns, der sich zusammensetzt aus:
   1) 20 bis 90 Gew.-% eines Kerns, der aus einem Copolymer erhältlich durch Polymerisation
      eines n-Alkylacrylats, dessen Alkylgruppe 5 bis 12 Kohlenstoffatome, vorzugsweise 5 bis 8 Kohlenstoffatome, aufweist, oder eines Gemisches von Alkylacrylaten, deren Alkylgruppen 2 bis 12 Kohlenstoffatome, vorzugsweise 4 bis 8 Kohlenstoffatome, aufweisen;
      eines polyfunktionellen Vernetzungsmittels, mit mindestens einer C-C-Doppelbindung, wobei mindestens eine der C-C-Doppelbindungen eine Vinylgruppe (CH₂=C-Gruppe) ist, und
      gegebenenfalls eines polyfunktionellen Pfropfungsmittels, mit mindestens einer C-C-Doppelbindung, wobei mindestens eine der C-C-Doppelbindungen eine Allylgruppe (CH₂=CH-CH₂-Gruppe) ist, besteht
      wobei der Kern eine molare Menge des polyfunktionellen Vernetzungsmittels und gegebenenfalls des polyfunktionellen Pfropfungsmittels von 0,05 bis 5 mol-% und vorzugsweise in einer Menge von 0,5 bis 1,5 mol-% enthält, bezogen auf die Gesamtmenge des Kerns;
   2) 80 bis 10 Gew-% einer Schale, die aus einem Copolymer erhältlich durch Polymerisation
      eines n-Alkylacrylats, dessen Alkylgruppe 4 bis 12 Kohlenstoffatome, vorzugsweise 4 bis 8 Kohlenstoffatome, aufweist, oder eines Gemisches von Alkylacrylaten, deren Alkylgruppen 2 bis 12 Kohlenstoffatome, vorzugsweise 4 bis 8 Kohlenstoffatome, aufweisen; und
      eines polyfunktionellen Pfropfungsmittels mit mindestens einer C-C-Doppelbindung, wobei mindestens eine der C-C-Doppelbindungen eine Allylgruppe (CH₂=CH-CH₂-Gruppe) ist, besteht,
      wobei die Schale das Pfropfungsmittel in einer molaren Menge von 0,05 bis 2,5 mol-% und vorzugsweise in einer Menge von 0,5 bis 1,5 mol-% enthält jeweils bezogen auf die Gesamtmenge der Schale, und
b) 30 bis 10 Gew.-%, vorzugsweise 25 bis 15 Gew.-% einer auf den Kern gepfropften Schale, die aus einem Alkylmethacrylatpolymer, dessen Alkylgruppe 1 bis 4 Kohlenstoffatome aufweist, oder aus einem statistischen Copolymer eines Alkylmethacrylats, dessen Alkylgruppe 1 bis 4 Kohlenstoffatome aufweist, und eines Alkylacrylats besteht, dessen Alkylgruppe 1 bis 8 Kohlenstoffatome aufweist, wobei das Alkylacrylat in einer molaren Menge von 5 bis 40 mol-% und vorzugsweise im Bereich von 10 bis 20 mol-% enthalten ist, bezogen auf die Gesamtmenge des statistischen Copolymers.

Die zur Bildung der Copolymere 1) und/oder 2) verwendbaren n-Alkylacrylate können gleich oder verschieden sein.

Als n-Alkylacrylate zur Bildung des Copolymers 1) eignen sich beispielsweise n-Pentylacrylat n-Hexylacrylat, n-Heptylacrylat und n-Octylacrylat. n-Octylacrylat ist bevorzugt.

Beispiele für n-Alkylacrylate, die gemäß der Erfindung zur Bildung des Copolymers 2) verwendbar sind, sind etwa n-Butylacrylat, n-Pentylacrylat, n-Hexylacrylat, n-Heptylacrylat und n-Octylacrylat. n-Octylacrylat ist bevorzugt.

Gemäß der vorliegenden Erfindung werden bevorzugt n-Alkylacrylate und insbesondere n-Octylacrylat zur Herstellung der Copolymere 1) und 2) verwendet.

Geeignete Gemische von Alkylacrylaten enthalten beispielsweise zumindest zwei Verbindungen ausgewählt aus der Gruppe bestehend aus Ethylacrylat, n-Propylacrylat, n-Butylacrylat, Amylacrylat, 2-Methylbutylacrylat, 2-Ethylhexylacrylat, n-Hexylacrylat, n-Octylacrylat, n-Decylacrylat, n-Dodecylacrylat und 3,5,5-Trimethylhexylacrylat.

Wenn zur Bildung der Copolymere 1) und/oder 2) ein Gemisch von Alkylacrylaten eingesetzt wird, wird n Alkylacrylat beispielsweise in einem Gewichtsanteil von mindestens 10 Gew.-% des Gemisches von Alkylacrylaten verwendet, wobei diese Menge vorzugsweise im Bereich von 20 bis 80 Gew.-% liegt.

Wenn zur Bildung der Copolymere 1) und/oder 2) ein Gemisch von Alkylacrylaten verwendet wird, werden vorzugsweise 20 bis 80 Gew.-% n-Octylacrylat und vorzugsweise 80 bis 20 Gew.-% n-Butylacrylat eingesetzt.

Beispiele für Alkylmethacrylate, die zur Bildung der auf den vernetzten elastomeren Kern gepfropften Schale gemäß der vorliegenden Erfindung zum Einsatz kommen können, sind beispielsweise Ethylmethacrylat, n-Propylmethacrylat, Isopropylmethacrylat; n-Butylmethacrylat, Isobutylacrylat und Methylmethacrylat. Methylmethacrylat ist insbesondere bevorzugt.

Das zur Bildung des Copolymers 1) verwendete Vernetzungsmittel kann gemäß der vorliegenden Erfindung insbesondere unter den Derivaten ausgewählt werden, die mindestens zwei Doppelbindungen vom Vinyltyp oder eine oder mehrere Doppelbindungen vom Vinyltyp und mindestens eine Doppelbindung vom Allyltyp aufweisen. Vorzugsweise werden Verbindungen eingesetzt, die in ihren Molekülen hauptsächlich Doppelbindungen vom Vinyltyp enthalten.

Als Vernetzungsmittel können beispielsweise Divinylbenzole, (Meth)acrylate von Polyalkoholen, wie beispielsweise Trimethylolpropantriacrylat, Trimethylolpropantrimethacrylat, Allylacrylat, Allylmethacrylat, Diacrylate oder Methacrylate von Alkylenglykolen mit 2 bis 10 Kohlenstoffatomen in der Alkylenkette und insbesondere Ethylenglykoldiacrylat, Ethylenglykoldimethacrylat, Butan-1,4-dioldiacrylat, Butan-1,4-dimethacrylat, Hexen-1,6-dioldiacrylat, Hexan-1,6-dimethacrylat, das Diacrylat oder Dimethacrylat von Polyoxyalkylenglykol der allgemeinen Formel VI eingesetzt werden: 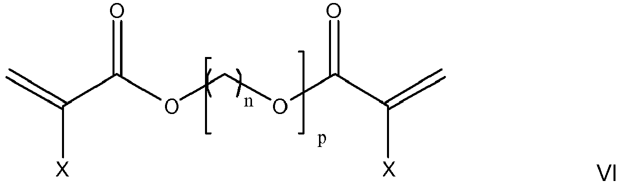 worin X Wasserstoff oder Methyl bedeutet, n eine ganze Zahl von 2 bis 4 und p eine ganze Zahl von 2 bis 20 bedeutet. Besonders bevorzugt ist das Diacrylat oder Dimethacrylat vor Polyoxyethylenglykol, worin die Polyoxyethylengruppe eine Molmasse von etwa 400 aufweist (n = 2 und p = 9 in der allgemeinen Formel VI).

Das zur Herstellung des Copolymers 2) verwendeten Pfropfungsmittel kann gemäß der vorliegenden Erfindung insbesondere unter den Derivaten ausgewählt werden, die mindestens zwei Doppelbindungen vom Allyltyp oder eine oder mehrere Doppelbindungen vom Allyltyp und mindestens eine Doppelbindung vom Vinyltyp enthalten.

Es werden vorzugsweise Verbindungen verwendet, die in ihren Molekülen hauptsächlich Doppelbindungen vom Allyltyp enthalten.

Als Beispiele für solche Pfropfungsmittel kommen beispielsweise Diallylmaleat, Diallylitaconat, Allylacrylat, Allylmethacrylat, Triallylcyanurat, Triallylisocyanurat, Diallylterephthalat und Triallyltrimesat in Betracht.

Die Komponente (C) weist üblicherweise eine Glasübergangstemperatur (T_{G}(C)) auf, die unterhalb von 0 °C liegt. Beispielsweise liegt die Glasübergangstemperatur (T_{G}(C)) der Komponente (C) im Bereich von -150 bis 0 °C und bevorzugt im Bereich von -60 bis -30 °C, bestimmt gemäß ISO 11357-2:2014.

Gegenstand der vorliegenden Erfindung ist daher auch ein Laminat, bei dem die Komponente (C) eine Glasübergangstemperatur (T_{G}(C)) aufweist, die unterhalb von 0 °C liegt.

Die Glasübergangstemperatur (T_{G}(C)) der Komponente (C) bezieht sich entsprechend der ISO 11357-2:2014 im Rahmen der vorliegenden Erfindung auf die Glasübergangstemperatur (T_{G}(C)) der trockenen Komponente (C).

"Trocken" bedeutet im Rahmen der vorliegenden Erfindung, dass die Komponente (C) weniger als 1 Gew.-%, bevorzugt weniger als 0,5 Gew.-% und insbesondere bevorzugt weniger als 0,1 Gew.-% Wasser enthält, bezogen auf das Gesamtgewicht der Komponente (C). Mehr bevorzugt bedeutet "trocken", dass die Komponente (C) kein Wasser enthält, und am meisten bevorzugt, dass die Komponente (C) kein Lösungsmittel enthält.

### Herstellung

Das erfindungsgemäße Laminat kann nach allen dem Fachmann bekannten Methoden hergestellt werden.

Bevorzugt erfolgt die Herstellung des Laminats in einem kontinuierlichen Verfahren.

Bevorzugt wird das erfindungsgemäße Laminat in einem Verfahren hergestellt, umfassend die folgenden Schritte:
a) Bereitstellen einer Folie aus einer Polymerzusammensetzung (PZ), die die Komponenten
   (A) mindestens ein Polyamid,
   (B) mindestens ein Copolymer, hergestellt durch Polymerisation mindestens der Komponenten
      (B1) mindestens ein C₂-C₂₀-Alken und
      (B2) mindestens ein C₂-C₁₈-Alkenylester
   enthält,
b) Erwärmen einer ersten Platte aus mindestens einem ersten Metall,
c) Verpressen der erwärmten ersten Platte aus Schritt b) mit der in Schritt a) bereitgestellten Folie unter Erhalt des Laminats.

Gegenstand der vorliegenden Erfindung ist daher auch ein Verfahren zur Herstellung eines erfindungsgemäßen Laminats, umfassend die Schritte
a) Bereitstellen einer Folie aus einer Polymerzusammensetzung (PZ), die die Komponenten
   (A) mindestens ein Polyamid,
   (B) mindestens ein Copolymer hergestellt durch Polymerisation mindestens der Komponenten
      (B1) mindestens ein C₂-C₂₀-Alken und
      (B2) mindestens ein C₁-C₁₈-Alkenylester
   enthält,
b) Erwärmen einer ersten Platte aus mindestens einem ersten Metall,
c) Verpressen der erwärmten ersten Platte aus Schritt b) mit der in Schritt a) bereitgestellten Folie unter Erhalt des Laminats.

Für die Polymerzusammensetzung (PZ) im erfindungsgemäßen Verfahren gelten die zuvor beschriebenen Ausführungen und Bevorzugungen wie für die Polymerzusammensetzung (PZ) des Laminats entsprechend. Für das mindestens eine Polyamid im erfindungsgemäßen Verfahren gelten die zuvor beschriebenen Ausführungen und Bevorzugungen für das mindestens eine Polyamid des Laminats ebenfalls entsprechend.

Ebenso gelten für das mindestens eine Copolymer im erfindungsgemäßen Verfahren die Ausführungen und Bevorzugungen für das mindestens eine Copolymer im erfindungsgemäßen Laminat entsprechend. Ebenso gelten für das mindestens eine erste Metall im erfindungsgemäßen Verfahren die zuvor beschriebenen Ausführungen und Bevorzugungen für das mindestens eine erste Metall des Laminats entsprechend.

In Schritt a) wird eine Folie aus der Polymerzusammensetzung (PZ) bereitgestellt. Die in Schritt a) bereitgestellte Folie besteht aus der Polymerzusammensetzung (PZ).

Verfahren zur Bereitstellung einer Folie aus einer Polymerzusammensetzung (PZ) sind dem Fachmann als solche bekannt. Bevorzugt wird die Folie in Schritt a) durch ein Extrusionsverfahren bereitgestellt.

Gegenstand der vorliegenden Erfindung ist daher auch ein Verfahren, bei dem die Folie in Schritt a) durch ein Extrusionsverfahren bereitgestellt wird.

Geeignete Extrusionsverfahren zur Bereitstellung der Folie aus der Polymerzusammensetzung (PZ) sind dem Fachmann bekannt und beispielsweise Castverfahren, Kalandrierverfahren, Blasverfahren oder Multiblasverfahren.

Die in Schritt a) bereitgestellte Folie aus der Polymerzusammensetzung (PZ) kann beliebige Dicken aufweisen. Üblicherweise weist die in Schritt a) bereitgestellte Folie aus der Polymerzusammensetzung (PZ) eine Dicke im Bereich von 1 bis 20 % größer auf als die mindestens eine weitere Schicht des herzustellenden Laminats, bevorzugt im Bereich von 2 bis 15 % größer auf als die mindestens eine weitere Schicht des herzustellenden Laminats und insbesondere bevorzugt im Bereich von 4 bis 10 % größer auf als die mindestens eine weitere Schicht des herzustellenden Laminats.

In Schritt b) wird eine erste Platte aus mindestens einem ersten Metall erwärmt. Die erste Platte besteht aus dem mindestens einen ersten Metall. Das Erwärmen der ersten Platte kann nach allen dem Fachmann bekannten Methoden erfolgen, bevorzugt wird die erste Platte in Schritt b) induktiv erwärmt.

Gegenstand der vorliegenden Erfindung ist daher auch ein Verfahren, bei dem das Erwärmen der ersten Platte in Schritt b) induktiv erfolgt.

Die erste Platte kann in Schritt b) auf eine beliebige Temperatur erwärmt werden. Bevorzugt wird die erste Platte in Schritt b) auf eine Temperatur erwärmt, die oberhalb der Schmelztemperatur (T_{M(PZ)}) und unterhalb der Zersetzungstemperatur der Polymerzusammensetzung (PZ) liegt.

Bevorzugt wird die erste Platte in Schritt b) auf eine Temperatur im Bereich von 150 bis 350 °C erwärmt, besonders bevorzugt im Bereich von 210 bis 280 °C und insbesondere bevorzugt im Bereich von 220 bis 250 °C.

Gegenstand der vorliegenden Erfindung ist daher auch ein Verfahren, bei dem die erste Platte in Schritt b) auf eine Temperatur im Bereich von 150 bis 350 °C erwärmt wird.

In Schritt c) wird die erwärmte erste Platte aus Schritt b) mit der in Schritt a) bereitgestellten Folie unter Erhalt des Laminats verpresst. Dabei verbindet sich die Folie mit der ersten Platte. Die Dicke der Folie kann dabei abnehmen.

Verfahren zum Verpressen der erwärmten ersten Platte aus Schritt b) mit der in Schritt a) bereitgestellten Folie sind dem Fachmann als solche bekannt.

Die Schritte b) und c) können gleichzeitig oder nacheinander durchgeführt werden. Bevorzugt werden die Schritte b) und c) gleichzeitig durchgeführt. Dann wird die erste Platte erwärmt, während sie mit der in Schritt a) bereitgestellten Folie verpresst wird.

Das in Schritt c) erhaltene Laminat wird üblicherweise abgekühlt. Das Abkühlen kann nach allen dem Fachmann bekannten Verfahren erfolgen, beispielsweise durch Einblasen von Druckluft auf das Laminat. Bevorzugt wird das Laminat abgekühlt während der Druck des Verpressens aufrechterhalten wird.

In dem erhaltenen Laminat ist die erwärmte erste Platte die erste Schicht aus dem mindestens einen ersten Metall und die Folie ist die mindestens eine weitere Schicht der Polymerzusammensetzung (PZ).

Für den Fall, dass das Laminat mindestens eine zweite Schicht enthalten soll, wird ein zusätzlicher Schritt b1) durchgeführt, bei dem eine zweite Platte aus mindestens einem zweiten Metall erwärmt wird. Für das Erwärmen der zweiten Platte in Schritt b1) gelten die zuvor beschriebenen Ausführungen und Bevorzugungen für das Erwärmen der ersten Platte in Schritt b) entsprechend.

In Schritt c) wird dann die erwärmte erste Platte mit der erwärmten zweiten Platte aus Schritt b1) verpresst, während sich die in Schritt a) bereitgestellte Folie zwischen der erwärmten ersten Platte und der erwärmten zweiten Platte befindet.

Das Verfahren zur Herstellung des erfindungsgemäßen Laminats umfasst dann üblicherweise die folgenden Schritte:
a) Bereitstellen einer Folie aus einer Polymerzusammensetzung (PZ), die die Komponenten
   (A) mindestens ein Polyamid,
   (B) mindestens ein Copolymer, hergestellt durch Polymerisation mindestens der Komponenten,
      (B1) mindestens ein C₂-C₂₀-Alken und
      (B2) mindestens ein C₂-C₁₈-Alkenylester
   enthält,
b) Erwärmen einer ersten Platte aus mindestens einem ersten Metall,
   b1) Erwärmen einer zweiten Platte aus mindestens einem zweiten Metall,
c) Positionieren der in Schritt a) bereitgestellten Folie zwischen der in Schritt b) erwärmten ersten Platte und der in Schritt b1) erwärmten zweiten Platte, und Verpressen der in Schritt b) erwärmten ersten Platte und der in Schritt b1) erwärmten zweiten Platte mit der in Schritt a) bereitgestellten Folie unter Erhalt des Laminats.

Gegenstand der vorliegenden Erfindung ist daher auch ein Verfahren zur Herstellung eines erfindungsgemäßen Laminats, das zusätzlich mindestens eine zweite Schicht mindestens eines zweiten Metalls umfasst und bei dem die mindestens eine erste Schicht mit der mindestens einer zweiten Schicht über die mindestens eine weitere Schicht verbunden ist, umfassend die Schritte:
a) Bereitstellen einer Folie aus einer Polymerzusammensetzung (PZ), die die Komponenten
   (A) mindestens ein Polyamid,
   (B) mindestens ein Copolymer, hergestellt durch Polymerisation mindestens der Komponenten,
      (B1) mindestens ein C₂-C₂₀-Alken und
      (B2) mindestens ein C₂-C₁₈-Alkenylester
   enthält,
b) Erwärmen einer ersten Platte aus mindestens einem ersten Metall,
   b1) Erwärmen einer zweiten Platte aus mindestens einem zweiten Metall,
c) Positionieren der in Schritt a) bereitgestellten Folie zwischen der in Schritt b) erwärmten ersten Platte und der in Schritt b1) erwärmten zweiten Platte, und Verpressen der in Schritt b) erwärmten ersten Platte und der in Schritt b1) erwärmten zweiten Platte mit der in Schritt a) bereitgestellten Folie unter Erhalt des Laminats.

Für das mindestens eine zweite Metall der zweiten Platte in dem erfindungsgemäßen Verfahren gelten die zuvor beschriebenen Ausführungen und Bevorzugungen für das mindestens eine zweite Metall der mindestens einen zweiten Schicht des Laminats entsprechend.

Für die zweite Platte sowie das Erwärmen der zweiten Platte gelten die zuvor beschriebenen Ausführungen und Bevorzugungen für die erste Platte und für das Erwärmen der ersten Platte entsprechend.

Ebenso gelten für Schritt c), in dem zusätzlich die zweite Platte positioniert wird, die zuvor beschriebenen Ausführungen und Bevorzugungen für Schritt c) entsprechend.

Nachfolgend wird die vorliegende Erfindung anhand von Beispielen näher erläutert, ohne sie hierauf zu beschränken.

### Beispiele

Es wurden die folgenden Komponenten eingesetzt

### Polyamid

P1: Polyamid 6 (Ultramid B27E der BASF SE)
P2: Polyamid 6/6.36 mit 30 Gew.-% Polyamid 6.36 Baueinheiten

### Copolymer

C1: LUWAX EAS 5 (Ethylen-Vinylacetat-Vinylalkohol-Copolymer der BASF SE, 25 bis 29 Gew.-% Vinylacetat, MVR (Melt Volume flow rate) (160 °C/325 g) 8-12 g/10 min)
C2: ESCORENE ULTRA FL 00309 (Ethylen-Vinylacetat-Vinylalkohol-Copolymer von Exxon Mobile, 9,4 Gew.-% Vinylacetat, MVR (Melt Volume flow rate) (190 °C/2,16 kg) 3 g/10 min gemäß ASTM D 1238)
C3: ESCORENE ULTRA FL 00328 (Ethylen-Vinylacetat-Vinylalkohol-Copolymer von Exxon Mobile, 27 Gew.-% Vinylacetat, MVR (Melt Volume flow rate) (190 °C/2,16 kg) 3 g/10 min gemäß ASTM D 1238)
C4: FLEXAREN 14003 (Ethylen-Vinylacetat-Vinylalkohol-Copolymer von Leuna, 14 Gew.-% Vinylacetat, MVR (Melt Volume flow rate) (190 °C/2,16 kg) 3 g/10 min gemäß ISO 1133)

### Kautschuk

- K1:: Lupolen KR1270 (Ethylen-Acrylat-Maleinsäureanhydrid-Copolymer der BASF SE)

### Erstes und zweites Metall

Stahl: HX260LADZ100MBO-Platte

### Herstellung von Polyamid 6/6.36

Zur Herstellung von Polyamid 6/6.36 wurden Caprolactam, C₃₆-Dimersäure (hydriert, Pripol 1009 der Firma Croda), 85 gew.-prozentige Hexamethylendiaminlösung in Wasser, und Wasser zunächst mit Stickstoff, überlagert und bei Überdruck und einer Temperatur von 270 °C für sieben Stunden gerührt und anschließend wurde für weitere vier Stunden unter Vakuum Wasser abdestilliert. Das erhaltene Polyamid wurde abgelassen, extrudiert und granuliert und anschließend mit heißem Wasser extrahiert und schließlich getrocknet. Die Ausgangsverbindungen wurden in solchen Mengen eingesetzt, dass das erhaltene Polyamid 30 Gew.-% Polyamid 6.36-Einheiten enthielt.

### Herstellung der Polymerzusammensetzung

Die in Tabelle 1 angegebenen Polymere wurden in den in Tabelle 1 angegebenen Mengen in einem Haake Extruder CTW100 bei 250 °C compoundiert und mit einem Durchsatz von 2 kg/h durch eine Runddüse mit einem Durchmesser von 3 mm extrudiert unter Erhalt von Granulat der Polymerzusammensetzung. Die in Tabelle 1 angegebenen Mengen sind jeweils in Gew.-%.

**Tabelle 1**

| Polymerzusammensetzung | P1 [Gew.-%] | P2 [Gew.-%] | C1 [Gew.-%] | C2 [Gew.-%] | C3 [Gew.-%] | C4 [Gew.-%] | K1 [Gew.-%] |
|---|---|---|---|---|---|---|---|
| PZ1 | 100 | | | | | | |
| PZ2 | 90 | | | | | | 10 |
| PZ3 | 88 | | | | | 2 | 10 |
| PZ4 | 88 | | 6 | | | | 6 |
| PZ5 | | 100 | | | | | |
| PZ6 | | 88 | 12 | | | | |
| PZ7 | | 90 | | 10 | | | |
| PZ8 | | 90 | | | 10 | | |
| PZ9 | 88 | | | | | 6 | 6 |

### Herstellung der Folien der Polymerzusammensetzung

Zur Herstellung der Folien der Polymerzusammensetzung wurde das Granulat der Polymerzusammensetzung wie es vorstehend beschrieben erhalten wurde bei 215 bis 235 °C in einem Haake Extruder CTW100 mit einem Durchsatz von 0,5 bis 1,0 kg/h extrudiert durch eine Schlitzdüse mit einer Breite von 100 mm, wobei Folien der Polymerzusammensetzung mit einer Dicke von 200 µm erhalten wurden.

### Herstellung von Laminaten

Vor der Herstellung wurden sowohl die Folien der Polymerzusammensetzung als auch die erste Platte und die zweite Platte des Stahls für 7 Tage bei 80 °C gelagert. Sowohl die Folien als auch der Stahl wurden im Bereich der Fügeflächen vor der Herstellung von Laminaten mit n-Heptan gereinigt.

Zur Herstellung des Laminats wurden eine erste Platte des Stahls und eine zweite Platte des Stahls in eine Vorrichtung eingelegt. Zwischen die erste Platte und die zweite Platte wurde eine Folie der Polymerzusammensetzung eingelegt. Die Platten werden mit einer Schließkraft von 6 kg zusammengepresst, so dass eine Dicke der Folie von 0,1 mm nach dem Erwärmen erzielt wird.

Durch induktive Erwärmung während des Verpressens wurden die erste und die zweite Platte jeweils innerhalb von 3 s auf eine Temperatur von 240 °C erwärmt und bei dieser Temperatur für weitere 7 s gehalten unter Erhalt des Laminats. Anschließend wurde das Laminat für 20 s mit Druckluft abgekühlt und während des weiteren Abkühlens auf Raumtemperatur die Kraft des Verpressens abgelassen.

Die erhaltenen Laminate wurden der folgenden Zugscherprüfung in Anlehnung an DIN 1465 direkt nach Herstellung und nach Lagerung für 14 Tage bei 70 °C und 62 % relativer Luftfeuchtigkeit unterzogen; es wurden jeweils fünf Proben geprüft:
i) Lagerung der Proben für 1 Stunde bei Raumtemperatur (25 °C).
ii) Einspannen in eine Prüfmaschine Instron 10KN/Instron 150KN mit Probenschutz und Ziehen bis zum Bruch mit einer Prüfgeschwindigkeit von 10 mm/min. Anhand der Maximalkraft wird bezogen auf die Fügefläche die Zugscherspannunng nach dem Fachmann bekannten Methoden ermittelt.
iii) Die Fügeteile werden aus der Halterung entnommen und das Bruchbild dokumentiert.

Die Ergebnisse sind in Tabelle 2 gezeigt.

**Tabelle 2**

| Beispiel | Polymerzusammensetzung | Zugfestigkeit vor Lagerung [MPa] | Zugfestigkeit nach Lagerung [MPa] |
|---|---|---|---|
| V1 | PZ1 | 6 | 0 |
| V2 | PZ2 | 7 | 0 |
| B3 | PZ3 | 11 | 5 |
| B4 | PZ4 | 17 | 17 |
| V5 | PZ5 | 8 | 6 |
| B6 | PZ6 | 11 | 6 |
| B7 | PZ7 | 21 | 15 |
| B8 | PZ8 | 22 | 14 |
| B9 | PZ9 | 14 | 10 |

## Patentansprüche

1. Laminat umfassend mindestens eine erste Schicht mindestens eines ersten Metalls und mindestens eine weitere Schicht einer Polymerzusammensetzung (PZ), **dadurch gekennzeichnet, dass** die Polymerzusammensetzung (PZ) die Komponenten
(A) mindestens ein Polyamid,
(B) mindestens ein Copolymer erhältlich durch Polymerisation mindestens der Komponenten
(B1) mindestens ein C₂-C₂₀-Alken und
(B2) mindestens ein C₂-C₁₈-Alkenylester,
enthält.

2. Laminat gemäß Anspruch 1, **dadurch gekennzeichnet, dass** das Laminat zusätzlich mindestens eine zweite Schicht mindestens eines zweiten Metalls umfasst und dass die mindestens eine erste Schicht mit der mindestens einen zweiten Schicht über die mindestens eine weitere Schicht verbunden ist.

3. Laminat gemäß Anspruch 1 oder 2, **dadurch gekennzeichnet, dass** die Komponente (A) erhältlich ist durch Polymerisation mindestens einer der Komponenten
(A1) Caprolactam,
(A2) mindestens eine C₄-C₄₀-Disäure,
(A3) mindestens ein C₄-C₂₀-Diamin.

4. Laminat gemäß einem der Ansprüche 1 bis 3, **dadurch gekennzeichnet, dass** die Komponente (B1) ausgewählt ist aus der Gruppe bestehend aus Ethen, Propen, 1-Buten und 2-Buten.

5. Laminat gemäß einem der Ansprüche 1 bis 4, **dadurch gekennzeichnet, dass** die Komponente (B2) ausgewählt ist aus der Gruppe bestehend aus Vinylacetat, Vinylpropionat und Vinylbutyrat.

6. Laminat gemäß einem der Ansprüche 1 bis 5, **dadurch gekennzeichnet, dass** die Komponente (B) ausgewählt ist aus der Gruppe bestehend aus Polyethylenvinylacetat, Polyethylenvinylalkohol und Ethylen-Vinylacetat-Vinylalkohol-Copolymeren.

7. Laminat gemäß einem der Ansprüche 1 bis 6, **dadurch gekennzeichnet, dass** die Polymerzusammensetzung (PZ) im Bereich von 2 bis 30 Gew.-% der Komponente (B) enthält, bezogen auf die Summe der Gewichtsprozente der Komponenten (A) und (B).

8. Laminat gemäß einem der Ansprüche 1 bis 7, **dadurch gekennzeichnet, dass** die Polymerzusammensetzung (PZ) zusätzlich im Bereich von 1 bis 30 Gew.-% einer Komponente (C), mindestens eines Kautschuks, enthält, bezogen auf die Summe der Gewichtsprozente der Komponenten (A), (B) und (C).

9. Laminat gemäß einem der Ansprüche 1 bis 8, **dadurch gekennzeichnet, dass** die Polymerzusammensetzung (PZ) zusätzlich mindestens einen Füllstoff ausgewählt aus der Gruppe bestehend aus anorganischen Füllstoffen, organischen Füllstoffen und Naturfüllstoffen enthält.

10. Laminat gemäß einem der Ansprüche 1 bis 9, **dadurch gekennzeichnet, dass** das mindestens eine erste Metall ausgewählt ist aus der Gruppe bestehend aus Eisen, Aluminium, Kupfer, Nickel und Magnesium sowie Legierungen daraus.

11. Laminat gemäß einem der Ansprüche 1 bis 10, **dadurch gekennzeichnet, dass** die mindestens eine erste Schicht eine Dicke im Bereich von 0,1 mm bis 0,6 mm aufweist und/oder dass die mindestens eine weitere Schicht eine Dicke im Bereich von 0,02 bis 1,5 mm aufweist.

12. Verfahren zur Herstellung eines Laminats gemäß einem der Ansprüche 1 bis 11, umfassend die Schritte
a) Bereitstellen einer Folie aus einer Polymerzusammensetzung (PZ), die die Komponenten
(A) mindestens ein Polyamid,
(B) mindestens ein Copolymer hergestellt durch Polymerisation mindestens der Komponenten
(B1) mindestens ein C₂-C₂₀-Alken und
(B2) mindestens ein C₁-C₁₈-Alkenylester
enthält,
b) Erwärmen einer ersten Platte aus mindestens einem ersten Metall,
c) Verpressen der erwärmten ersten Platte aus Schritt b) mit der in Schritt a) bereitgestellten Folie unter Erhalt des Laminats.

13. Verfahren gemäß Anspruch 12, **dadurch gekennzeichnet, dass** die erste Platte in Schritt b) auf eine Temperatur im Bereich von 150 bis 350 °C erwärmt wird.

14. Verfahren gemäß Anspruch 12 oder 13, **dadurch gekennzeichnet, dass** das Erwärmen der ersten Platte in Schritt b) induktiv erfolgt.

15. Verfahren gemäß einem der Ansprüche 12 bis 14, **dadurch gekennzeichnet, dass** die Folie in Schritt a) durch ein Extrusionsverfahren bereitgestellt wird.

## Claims

1. A laminate comprising at least one first layer of at least one first metal and at least one further layer of a polymer composition (PC), wherein the polymer composition (PC) comprises the following components:
(A) at least one polyamide,
(B) at least one copolymer obtainable by polymerizing at least the following components:
(B1) at least one C₂-C₂₀-alkene and
(B2) at least one C₂-C₁₈-alkenyl ester.

2. The laminate according to claim 1, wherein the laminate additionally comprises at least one second layer of at least one second metal and wherein the at least one first layer is joined to the at least one second layer via the at least one further layer.

3. The laminate according to claim 1 or 2, wherein component (A) is obtainable by polymerizing at least one of the following components:
(A1) caprolactam,
(A2) at least one C₄-C₄₀ diacid,
(A3) at least one C₄-C₂₀ diamine.

4. The laminate according to any of claims 1 to 3, wherein component (B1) is selected from the group consisting of ethene, propene, 1-butene and 2-butene.

5. The laminate according to any of claims 1 to 4, wherein component (B2) is selected from the group consisting of vinyl acetate, vinyl propionate and vinyl butyrate.

6. The laminate according to any of claims 1 to 5, wherein component (B) is selected from the group consisting of polyethylene-vinyl acetate, polyethylene-vinyl alcohol and ethylene-vinyl acetate-vinyl alcohol copolymers.

7. The laminate according to any of claims 1 to 6, wherein the polymer composition (PC) comprises in the range from 2% to 30% by weight of component (B), based on the sum total of the percentages by weight of components (A) and (B).

8. The laminate according to any of claims 1 to 7, wherein the polymer composition (PC) additionally comprises in the range from 1% to 30% by weight of a component (C), at least one rubber, based on the sum total of the percentages by weight of components (A), (B) and (C).

9. The laminate according to any of claims 1 to 8, wherein the polymer composition (PC) additionally comprises at least one filler selected from the group consisting of inorganic fillers, organic fillers and natural fillers.

10. The laminate according to any of claims 1 to 9, wherein the at least one first metal is selected from the group consisting of iron, aluminum, copper, nickel and magnesium and also alloys thereof.

11. The laminate according to any of claims 1 to 10, wherein the at least one first layer has a thickness in the range from 0.1 mm to 0.6 mm and/or wherein the at least one further layer has a thickness in the range from 0.02 mm to 1.5 mm.

12. A process for producing a laminate according to any of claims 1 to 11, comprising the steps of
a) providing a film of a polymer composition (PC) comprising the following components:
(A) at least one polyamide,
(B) at least one copolymer prepared by polymerizing at least the following components:
(B1) at least one C₂-C₂₀-alkene and
(B2) at least one C₁-C₁₈-alkenyl ester,
b) heating a first sheet of at least one first metal,
c) pressing the heated first sheet from step b) with the film provided in step a) to obtain the laminate.

13. The process according to claim 12, wherein step b) comprises heating the first sheet to a temperature in the range from 150°C to 350°C.

14. The process according to claim 12 or 13, wherein the heating of the first sheet in step b) is effected by inductive means.

15. The process according to any of claims 12 to 14, wherein step a) comprises providing the film by an extrusion process.

## Revendications

1. Stratifié comprenant au moins une première couche d'au moins un premier métal et au moins une autre couche d'une composition de polymères (PZ), **caractérisé en ce que** la composition de polymères (PZ) contient les composants
(A) au moins un polyamide,
(B) au moins un copolymère pouvant être obtenu par polymérisation d'au moins les composants
(B1) au moins un alcène en C₂-C₂₀ et
(B2) au moins un ester alcénylique en C₂-C₁₈.

2. Stratifié selon la revendication 1, **caractérisé en ce que** le stratifié comprend en outre au moins une deuxième couche d'au moins un deuxième métal, et que l'au moins une première couche est assemblée à l'au moins une deuxième couche par l'intermédiaire de l'au moins une autre couche.

3. Stratifié selon la revendication 1 ou 2, **caractérisé en ce que** le composant (A) peut être obtenu par polymérisation d'au moins l'un des composants
(A1) caprolactame,
(A2) au moins un diacide en C₄-C₄₀,
(A3) au moins une diamine en C₄-C₂₀.

4. Stratifié selon l'une des revendications 1 à 3, **caractérisé en ce que** le composant (B1) est choisi dans le groupe consistant en l'éthène, le propène, le 1-butène et le 2-butène.

5. Stratifié selon l'une des revendications 1 à 4, **caractérisé en ce que** le composant (B2) est choisi dans le groupe consistant en l'acétate de vinyle, le propionate de vinyle et le butyrate de vinyle.

6. Stratifié selon l'une des revendications 1 à 5, **caractérisé en ce que** le composant (B) est choisi dans le groupe consistant en le poly(éthylène-acétate de vinyle), le poly(éthylène-alcool vinylique) et les copolymères éthylène-acétate de vinyle-alcool vinylique.

7. Stratifié selon l'une des revendications 1 à 6, **caractérisé en ce que** la composition de polymères (PZ) contient une quantité de 2 à 30 % en poids du composant (B), par rapport à la somme des pourcentages en poids des composants (A) et (B).

8. Stratifié selon l'une des revendications 1 à 7, **caractérisé en ce que** la composition de polymères (PZ) contient en outre une quantité de 1 à 30 % en poids d'un composant (C), au moins un caoutchouc, par rapport à la somme des pourcentages en poids des composants (A), (B) et (C).

9. Stratifié selon l'une des revendications 1 à 8, **caractérisé en ce que** la composition de polymères (PZ) contient en outre au moins une charge choisie dans le groupe consistant en les charges inorganiques, les charges organiques et les charges naturelles.

10. Stratifié selon l'une des revendications 1 à 9, **caractérisé en ce que** l'au moins un métal est choisi dans le groupe consistant en le fer, l'aluminium, le cuivre, le nickel et le magnésium, ainsi que les alliages de ceux-ci.

11. Stratifié selon l'une des revendications 1 à 10, **caractérisé en ce que** l'au moins une première couche présente une épaisseur dans la plage de 0,1 mm à 0,6 mm et/ou **en ce que** l'au moins une autre couche présente une épaisseur dans la plage de 0,02 à 1,5 mm.

12. Procédé de fabrication d'un stratifié selon l'une des revendications 1 à 11, comprenant les étapes
a) fourniture d'une feuille en une composition de polymères (PZ), qui contient les composants
(A) au moins un polyamide,
(B) au moins un copolymère fabriqué par polymérisation d'au moins les composants
(B1) au moins un alcène en C₂-C₂₀ et
(B2) au moins un ester alcénylique en C₁-C₁₈,
b) chauffage d'une première plaque en au moins un premier métal,
c) compression de la première plaque chauffée de l'étape b) avec la feuille fournie dans l'étape a), avec obtention du stratifié.

13. Procédé selon la revendication 12, **caractérisé en ce que** la première plaque est chauffée dans l'étape b) à une température dans la plage de 150 à 350 °C.

14. Procédé selon la revendication 12 ou 13, **caractérisé en ce que** le chauffage de la première plaque a lieu par induction dans l'étape b).

15. Procédé selon l'une des revendications 12 à 14, **caractérisé en ce que** la feuille est préparée dans l'étape a) par un procédé par extrusion.
